# EUROPEAN PATENT APPLICATION

(11) **EP 4 274 332 A1**
(43) Date of publication of application: **08.11.2023**
(21) Application number: 21912425.2
(22) Date of filing: 04.01.2021
(51) Int. Cl.: H04W 72/04, H04W 76/27

(54) **BEAM INDICATION METHOD AND APPARATUS, AND COMMUNICATION DEVICE**

(71) Applicant: Beijing Xiaomi Mobile Software Co., Ltd., Beijing 100085 (CN)
(72) Inventor: LI, Mingju, Beijing 100085 (CN)
(74) Representative: dompatent von Kreisler Selting Werner - Partnerschaft von Patent- und Rechtsanwälten mbB
(86) International application number: PCT/CN2021/070182
(87) International publication number: WO 2022/141642

(57) **Abstract**

The present invention relates to the technical field of wireless communications and provides a beam indication method and apparatus, and a communication device. The method includes: a terminal device using a first receiving beam to receive first indication information so as to determine a second receiving beam used during subsequent communication of the terminal device and a network device, the first receiving beam corresponding to a first transmitting/receiving point (TRP) or a second TRP; and determining, according to the first indication information, a second receiving beam corresponding to the second TRP, such that the second receiving beam is used for receiving when indication signaling transmitted by the network device by using the second TRP is received subsequently, indication of the receiving beam can be performed in a communication process, and the receiving success rate of the signaling is improved.

## Description

### TECHNICAL FIELD

The disclosure relates to a field of wireless communication technology, in particular to a beam indication method, a beam indication apparatus and a communication device.

### BACKGROUND

In the New Radio (NR) technology, especially when a communication frequency band is within a Frequency Range (FR) 2, due to faster attenuation of high frequency channels, beam-based transmission and reception are required to ensure coverage.

In Rel-16, dedicated beams of a Physical Downlink Control Channel (PDCCH), a Physical Downlink Shared Channel (PDSCH), a Physical Uplink Shared Channel (PUSCH), and a Physical Uplink Control Channel (PUCCH), and each uplink and downlink reference signal are indicated independently, which causes a larger signaling overhead. Therefore, to reduce the signaling overhead, a common beam can be used, i.e., a common beam is used for indicating multiple channels and/or reference signals. For example, a common beam can be shared by at least two channels or at least two reference signals.

However, how to indicate a sending beam or a receiving beam during a communication process is a problem to be solved.

### SUMMARY

The disclosure provides a beam indication method, a beam indication apparatus and a communication device, to solve the technical problem of incapable of indicating a receiving beam of indication information sent by a Medium Access Control (MAC) or Downlink Control Information (DCI).

According to a first aspect of embodiments of the disclosure, a beam indication method, applicable to a terminal device, is provided. The method includes:
receiving, using a first receiving beam, first indication information sent by a network device, the first indication information being configured to indicate a second receiving beam;
in which, the first receiving beam corresponds to a first Transmission and Reception Point (TRP) or a second TRP, and the second receiving beam corresponds to the second TRP.

Optionally, the first receiving beam corresponds to the first TRP, and the second receiving beam corresponds to an initial beam of the second TRP.

Optionally, the first indication information is a first MAC Control Element (MAC CE);
in which, the first MAC CE is configured to indicate an identification (ID) of a first Control Resource Set (CORESET) associated with the second TRP and a Transmission Configuration Indicator (TCI) state index corresponding to the initial beam of the second TRP, and the initial beam of the second TRP corresponds to the first CORESET.

Optionally, the first indication information is a second MAC CE and first Downlink Control Information (DCI);
in which, the second MAC CE is configured to indicate a plurality of activated TCI state indexes; and
the first DCI is configured to indicate a TCI state index corresponding to the initial beam of the second TRP, and the TCI state index is one TCI state index of the plurality of activated TCI state indexes included in the second MAC CE.

Optionally, the first receiving beam corresponds to the first TRP, and the second receiving beam corresponds to an update beam of the second TRP; or the first receiving beam corresponds to the second TRP, and the second receiving beam corresponds to an update beam of the second TRP.

Optionally, the first indication information is a third MAC CE;
in which, the third MAC CE is configured to indicate an ID of a second CORESET associated with the second TRP and a TCI state index corresponding to the update beam of the second TRP, and the update beam of the second TRP corresponds to the second CORESET.

Optionally, the first indication information is a fourth MAC CE and second DCI;
in which, the fourth MAC CE is configured to indicate a plurality of activated TCI state indexes; and
the second DCI is configured to indicate a TCI state index corresponding to the update beam of the second TRP, and the TCI state index is one TCI state index of the plurality of activated TCI state indexes included in the fourth MAC CE.

Optionally, the plurality of activated TCI state indexes carried in the fourth MAC CE include a TCI state index corresponding to an initial beam of the second TRP.

Optionally, the first DCI and the second DCI include a target indication field, and the target indication field is configured to indicate a TRP ID and/or a CORESET pool index corresponding to the TCI state index.

Optionally, in the first DCI and the second DCI, each TCI state index corresponds to a preset TRP ID and/or a CORESET pool index.

Optionally, a TRP ID and/or a CORESET pool index corresponding to the TCI state index in either the first DCI or the second DCI is a TRP ID and/or a CORESET pool index indicated by the MAC CE that activates the TCI state index.

Optionally, the method further includes:
determining the first receiving beam;
in which, the first receiving beam is an initial receiving beam of a CORESET CORESET#0 associated with the first TRP.

Optionally, the method further includes:
receiving second indication information using a known receiving beam corresponding to the first TRP, in which the second indication information is configured to determine the first receiving beam.

Optionally, the known receiving beam corresponds to a CORESET CORESET#0 associated with the first TRP; or
the known receiving beam corresponds to a third CORESET associated with the first TRP, and is indicated by third indication information sent using the CORESET CORESET#0 associated with the first TRP.

Optionally, at least one MAC CE of the first MAC CE, the second MAC CE, the third MAC CE and the fourth MAC CE includes:
one or more TCI state indexes corresponding to a TRP ID; or
one or more TCI state indexes corresponding to a CORESET pool index.

Optionally, at least one MAC CE of the first MAC CE, the second MAC CE, the third MAC CE and the fourth MAC CE includes:
a plurality of TCI state indexes corresponding to a plurality of TRP IDs, in which each TCI state index corresponds to a TRP ID; or
a plurality of TCI state indexes corresponding to a plurality of CORESET pool indexes, in which each TCI state index corresponds to a CORESET pool index.

Optionally, at least one MAC CE of the first MAC CE, the second MAC CE, the third MAC CE and the fourth MAC CE includes:
an indication field corresponding to at least one TCI state index, in which the indication field is configured to indicate whether the at least one TCI state index exists in the at least one MAC CE.

According to a second aspect of the embodiments of the disclosure, a beam indication method, applicable to a network device, is provided. The method includes:
sending first indication information to a terminal device using a first sending beam; in which
in which, the first indication information is configured to indicate a second receiving beam of the terminal device, and the first sending beam corresponds to a first receiving beam of the terminal device; and
the first receiving beam corresponds to a first TRP or a second TRP, and the second receiving beam corresponds to the second TRP.

Optionally, the first receiving beam corresponds to the first TRP, and the second receiving beam corresponds to an initial beam of the second TRP.

Optionally, the first indication information is a first MAC CE;
in which, the first MAC CE is configured to indicate an ID of a first CORESET associated with the second TRP and a TCI state index corresponding to the initial beam of the second TRP, and the initial beam of the second TRP corresponds to the first CORESET.

Optionally, the first indication information is a second MAC CE and first DCI; in which
in which, the second MAC CE is configured to indicate a plurality of activated TCI state indexes; and
the first DCI is configured to indicate a TCI state index corresponding to the initial beam of the second TRP, and the TCI state index is one TCI state index of the plurality of activated TCI state indexes included in the second MAC CE.

Optionally, the first receiving beam corresponds to the first TRP, and the second receiving beam corresponds to an update beam of the second TRP; or the first receiving beam corresponds to the second TRP, and the second receiving beam corresponds to an update beam of the second TRP.

Optionally, the first indication information is a third MAC CE;
in which, the third MAC CE is configured to indicate an ID of a second CORESET associated with the second TRP and a TCI state index corresponding to the update beam of the second TRP, and the update beam of the second TRP corresponds to the second CORESET.

Optionally, the first indication information is a fourth MAC CE and second DCI;
in which, the fourth MAC CE is configured to indicate a plurality of activated TCI state indexes; and
the second DCI is configured to indicate a TCI state index corresponding to the update beam of the second TRP, and the TCI state index is one TCI state index of the plurality of activated TCI state indexes included in the fourth MAC CE.

Optionally, the plurality of TCI state indexes carried in the fourth MAC CE include a TCI state index corresponding to an initial beam of the second TRP.

Optionally, the first DCI and the second DCI include a target indication field, and the target indication field is configured to indicate a TRP ID and/or a CORESET pool index corresponding to the TCI state index.

Optionally, in the first DCI and the second DCI, each TCI state index corresponds to a preset TRP ID and/or a CORESET pool index.

Optionally, a TRP ID and/or a CORESET pool index corresponding to the TCI state index in either the first DCI or the second DCI is a TRP ID and/or a CORESET pool index indicated by the MAC CE that activates the TCI state index.

Optionally, the first receiving beam is an initial receiving beam corresponding to a CORESET CORESET#0 associated with the first TRP.

Optionally, the method further includes:
sending second indication information to the terminal device using a sending beam corresponding to a known receiving beam of the terminal device;
in which, the second indication information is configured to indicate the first receiving beam of the terminal device, and the known receiving beam corresponds to the first TRP.

Optionally, the known receiving beam corresponds to a CORESET CORESET#0 associated with the first TRP; or the known receiving beam corresponds to a third CORESET associated with the first TRP, and is indicated by third indication information sent through the CORESET CORESET#0 associated with the first TRP.

Optionally, at least one MAC CE of the first MAC CE, the second MAC CE, the third MAC CE and the fourth MAC CE includes:
one or more TCI state indexes corresponding to a TRP ID; or
one or more TCI state indexes corresponding to a CORESET pool index.

Optionally, at least one MAC CE of the first MAC CE, the second MAC CE, the third MAC CE and the fourth MAC CE includes:
a plurality of TCI state indexes corresponding to a plurality of TRP IDs, in which each TCI state index corresponds to a TRP ID; or
a plurality of TCI state indexes corresponding to a plurality of CORESET pool indexes, in which each TCI state index corresponds to a CORESET pool index.

Optionally, at least one MAC CE of the first MAC CE, the second MAC CE, the third MAC CE and the fourth MAC CE includes:
an indication field corresponding to at least one TCI state index, in which the indication field is configured to indicate whether the at least one TCI state index exists in the at least one MAC CE.

According to a third aspect of the embodiments of the disclosure, a beam indication apparatus, applicable to a terminal device, is provided. The apparatus includes:
a receiving module, configured to receive first indication information sent by a network device using a first receiving beam, the first indication information being configured to indicate a second receiving beam;
in which, the first receiving beam corresponds to a first TRP or a second TRP, and the second receiving beam corresponds to the second TRP.

As a possible implementation, the first receiving beam corresponds to the first TRP, and the second receiving beam corresponds to an initial beam of the second TRP.

As a possible implementation, the first indication information is a first MAC CE;
in which, the first MAC CE is configured to indicate an ID of a first CORESET associated with the second TRP and a TCI state index corresponding to the initial beam of the second TRP, and the initial beam of the second TRP corresponds to the first CORESET.

As a possible implementation, the first indication information is a second MAC CE and first DCI;
in which, the second MAC CE is configured to indicate a plurality of activated TCI state indexes; and
the first DCI is configured to indicate a TCI state index corresponding to the initial beam of the second TRP, and the TCI state index is one TCI state index of the plurality of activated TCI state indexes included in the second MAC CE.

As a possible implementation, the first receiving beam corresponds to the first TRP, and the second receiving beam corresponds to an update beam of the second TRP; or
the first receiving beam corresponds to the second TRP, and the second receiving beam corresponds to an update beam of the second TRP.

As a possible implementation, the first indication information is a third MAC CE;
in which, the third MAC CE is configured to indicate an ID of a second CORESET associated with the second TRP and a TCI state index corresponding to the update beam of the second TRP, and the update beam of the second TRP corresponds to the second CORESET.

As a possible implementation, the first indication information is a fourth MAC CE and second DCI;
in which, the fourth MAC CE is configured to indicate a plurality of activated TCI state indexes; and
the second DCI is configured to indicate a TCI state index corresponding to the update beam of the second TRP, and the TCI state index is one TCI state index of the plurality of activated TCI state indexes included in the fourth MAC CE.

As a possible implementation, the plurality of activated TCI state indexes carried in the fourth MAC CE include a TCI state index corresponding to an initial beam of the second TRP.

As a possible implementation, the first DCI and the second DCI include a target indication field, and the target indication field is configured to indicate a TRP ID and/or a CORESET pool index corresponding to the TCI state index.

As a possible implementation, in the first DCI and the second DCI, each TCI state index corresponds to a preset TRP ID and/or a CORESET pool index.

As a possible implementation, a TRP ID and/or a CORESET pool index corresponding to the TCI state index in either the first DCI or the second DCI is a TRP ID and/or a CORESET pool index indicated by the MAC CE that activates the TCI state index.

As a possible implementation, the apparatus further includes:
a determining module, configured to determine the first receiving beam;
in which, the first receiving beam is an initial receiving beam of a CORESET CORESET#0 associated with the first TRP.

As a possible implementation, the receiving module is further configured to:
receive second indication information using a known receiving beam corresponding to the first TRP, in which the second indication information is configured to determine the first receiving beam.

As a possible implementation, the known receiving beam corresponds to a CORESET CORESET#0 associated with the first TRP; or the known receiving beam is determined according to third indication information sent through the CORESET CORESET#0 associated with the first TRP, and is a receiving beam corresponding to a third CORESET associated with the first TRP.

As a possible implementation, at least one MAC CE of the first MAC CE, the second MAC CE, the third MAC CE and the fourth MAC CE includes:
one or more TCI state indexes corresponding to a TRP ID; or
one or more TCI state indexes corresponding to a CORESET pool index.

As a possible implementation, at least one MAC CE of the first MAC CE, the second MAC CE, the third MAC CE and the fourth MAC CE includes:
a plurality of TCI state indexes corresponding to a plurality of TRP IDs, in which each TCI state index corresponds to a TRP ID; or
a plurality of TCI state indexes corresponding to a plurality of CORESET pool indexes, in which each TCI state index corresponds to a CORESET pool index.

As a possible implementation, at least one MAC CE of the first MAC CE, the second MAC CE, the third MAC CE and the fourth MAC CE includes:
an indication field corresponding to at least one TCI state index, in which the indication field is configured to indicate whether the at least one TCI state index exists in the at least one MAC CE.

According to a fourth aspect of the embodiments of the disclosure, a beam indication apparatus, applicable to a network device, is provided. The apparatus includes:
a sending module, configured to send first indication information to a terminal device using a first sending beam;
in which, the first indication information is configured to indicate a second receiving beam of the terminal device, and the first sending beam corresponds to a first receiving beam of the terminal device; and
the first receiving beam corresponds to a first TRP or a second TRP, and the second receiving beam corresponds to the second TRP.

As a possible implementation, the first receiving beam corresponds to the first TRP, and the second receiving beam corresponds to an initial beam of the second TRP.

As a possible implementation, the first indication information is a first MAC CE; in which the first MAC CE is configured to indicate an ID of a first CORESET associated with the second TRP and a TCI state index corresponding to the initial beam of the second TRP, and the initial beam of the second TRP corresponds to the first CORESET.

As a possible implementation, the first indication information is a second MAC CE and first DCI; in which the second MAC CE is configured to indicate a plurality of activated TCI state indexes; and the first DCI is configured to indicate a TCI state index corresponding to the initial beam of the second TRP, and the TCI state index is one TCI state index of the plurality of activated TCI state indexes included in the second MAC CE.

As a possible implementation, the first receiving beam corresponds to the first TRP, and the second receiving beam corresponds to an update beam of the second TRP; or the first receiving beam corresponds to the second TRP, and the second receiving beam corresponds to an update beam of the second TRP.

As a possible implementation, the first indication information is a third MAC CE;
in which, the third MAC CE is configured to indicate an ID of a second CORESET associated with the second TRP and a TCI state index corresponding to the update beam of the second TRP, and the update beam of the second TRP corresponds to the second CORESET.

As a possible implementation, the first indication information is a fourth MAC CE and second DCI;
in which, the fourth MAC CE is configured to indicate a plurality of activated TCI state indexes; and
the second DCI is configured to indicate a TCI state index corresponding to the update beam of the second TRP, and the TCI state index is one TCI state index of the plurality of activated TCI state indexes included in the fourth MAC CE.

As a possible implementation, the plurality of TCI state indexes carried in the fourth MAC CE include a TCI state index corresponding to an initial beam of the second TRP.

As a possible implementation, the first DCI and the second DCI include a target indication field, and the target indication field is configured to indicate a TRP ID and/or a CORESET pool index corresponding to the TCI state index.

As a possible implementation, in the first DCI and the second DCI, each TCI state index corresponds to a preset TRP ID and/or a CORESET pool index.

As a possible implementation, a TRP ID and/or a CORESET pool index corresponding to the TCI state index in either the first DCI or the second DCI is a TRP ID and/or a CORESET pool index indicated by the MAC CE that activates the TCI state index.

As a possible implementation,
the first receiving beam is an initial receiving beam corresponding to a CORESET CORESET#0 associated with the first TRP.

As a possible implementation, the sending module is further configured to:
send second indication information to the terminal device using a sending beam corresponding to a known receiving beam of the terminal device;
in which, the second indication information is configured to indicate the first receiving beam of the terminal device, and the known receiving beam corresponds to the first TRP.

As a possible implementation, the known receiving beam corresponds to a CORESET CORESET#0 associated with the first TRP; or the known receiving beam corresponds to a third CORESET associated with the first TRP, and is indicated by third indication information sent through the CORESET CORESET#0 associated with the first TRP.

As a possible implementation, at least one MAC CE of the first MAC CE, the second MAC CE, the third MAC CE and the fourth MAC CE includes:
one or more TCI state indexes corresponding to a TRP ID; or
one or more TCI state indexes corresponding to a CORESET pool index.

As a possible implementation, at least one MAC CE of the first MAC CE, the second MAC CE, the third MAC CE and the fourth MAC CE includes:
a plurality of TCI state indexes corresponding to a plurality of TRP IDs, in which each TCI state index corresponds to a TRP ID; or
a plurality of TCI state indexes corresponding to a plurality of CORESET pool indexes, in which each TCI state index corresponds to a CORESET pool index.

As a possible implementation, at least one MAC CE of the first MAC CE, the second MAC CE, the third MAC CE and the fourth MAC CE includes:
an indication field corresponding to at least one TCI state index, in which the indication field is configured to indicate whether the at least one TCI state index exists in the at least one MAC CE.

According to a fifth aspect of the embodiments of the disclosure, a terminal device is provided. The terminal device includes: a transceiver, a memory and a processor;

the memory is configured to store computer programs, the transceiver is configured to send and receive data under control of the processor, and the processor is configured to read the computer programs in the memory to perform the following operations:
receiving, using a first receiving beam, first indication information sent by a network device, the first indication information being configured to indicate a second receiving beam;
in which, the first receiving beam corresponds to a first TRP or a second TRP, and the second receiving beam corresponds to the second TRP.

As a possible implementation, the first receiving beam corresponds to the first TRP, and the second receiving beam corresponds to an initial beam of the second TRP.

As a possible implementation, the first indication information is a first MAC CE;
in which, the first MAC CE is configured to indicate an ID of a first CORESET associated with the second TRP and a TCI state index corresponding to the initial beam of the second TRP, and the initial beam of the second TRP corresponds to the first CORESET.

As a possible implementation, the first indication information is a second MAC CE and first DCI;
in which, the second MAC CE is configured to indicate a plurality of activated TCI state indexes; and
the first DCI is configured to indicate a TCI state index corresponding to the initial beam of the second TRP, and the TCI state index is one TCI state index of the plurality of activated TCI state indexes included in the second MAC CE.

As a possible implementation, the first receiving beam corresponds to the first TRP, and the second receiving beam corresponds to an update beam of the second TRP; or
the first receiving beam corresponds to the second TRP, and the second receiving beam corresponds to an update beam of the second TRP.

As a possible implementation, the first indication information is a third MAC CE;
in which, the third MAC CE is configured to indicate an ID of a second CORESET associated with the second TRP and a TCI state index corresponding to the update beam of the second TRP, and the update beam of the second TRP corresponds to the second CORESET.

As a possible implementation, the first indication information is a fourth MAC CE and second DCI;
in which, the fourth MAC CE is configured to indicate a plurality of activated TCI state indexes; and
the second DCI is configured to indicate a TCI state index corresponding to the update beam of the second TRP, and the TCI state index is one TCI state index of the plurality of activated TCI state indexes included in the fourth MAC CE.

As a possible implementation, the plurality of activated TCI state indexes carried in the fourth MAC CE include a TCI state index corresponding to an initial beam of the second TRP.

As a possible implementation, the first DCI and the second DCI include a target indication field, and the target indication field is configured to indicate a TRP ID and/or a CORESET pool index corresponding to the TCI state index.

As a possible implementation, in the first DCI and the second DCI, each TCI state index corresponds to a preset TRP ID and/or a CORESET pool index.

As a possible implementation, a TRP ID and/or a CORESET pool index corresponding to the TCI state index in either the first DCI or the second DCI is a TRP ID and/or a CORESET pool index indicated by the MAC CE that activates the TCI state index.

As a possible implementation, the terminal device further includes:
determining the first receiving beam;
in which, the first receiving beam is an initial receiving beam of a CORESET CORESET#0 associated with the first TRP.

As a possible implementation, the terminal device further includes:
receiving second indication information using a known receiving beam corresponding to the first TRP, in which the second indication information is configured to determine the first receiving beam.

As a possible implementation, the known receiving beam corresponds to a CORESET CORESET#0 associated with the first TRP; or the known receiving beam corresponds to a third CORESET associated with the first TRP, and is indicated by third indication information sent using the CORESET CORESET#0 associated with the first TRP.

As a possible implementation, at least one MAC CE of the first MAC CE, the second MAC CE, the third MAC CE and the fourth MAC CE includes: one or more TCI state indexes corresponding to a TRP ID; or one or more TCI state indexes corresponding to a CORESET pool index.

As a possible implementation, at least one MAC CE of the first MAC CE, the second MAC CE, the third MAC CE and the fourth MAC CE includes: a plurality of TCI state indexes corresponding to a plurality of TRP IDs, in which each TCI state index corresponds to a TRP ID; or a plurality of TCI state indexes corresponding to a plurality of CORESET pool indexes, in which each TCI state index corresponds to a CORESET pool index.

As a possible implementation, at least one MAC CE of the first MAC CE, the second MAC CE, the third MAC CE and the fourth MAC CE includes: an indication field corresponding to at least one TCI state index, in which the indication field is configured to indicate whether the at least one TCI state index exists in the at least one MAC CE.

According to a sixth aspect of the embodiments of the disclosure, a network device is provided. The network device includes: a transceiver, a memory and a processor;

the memory is configured to store computer programs, the transceiver is configured to send and receive data under control of the processor, and the processor is configured to read the computer programs in the memory to perform the following operations:
sending first indication information to a terminal device using a first sending beam;
in which, the first indication information is configured to indicate a second receiving beam of the terminal device, and the first sending beam corresponds to a first receiving beam of the terminal device; and
the first receiving beam corresponds to a first TRP or a second TRP, and the second receiving beam corresponds to the second TRP.

As a possible implementation, the first receiving beam corresponds to the first TRP, and the second receiving beam corresponds to an initial beam of the second TRP.

As a possible implementation, the first indication information is a first MAC CE; in which the first MAC CE is configured to indicate an ID of a first CORESET associated with the second TRP and a TCI state index corresponding to the initial beam of the second TRP, and the initial beam of the second TRP corresponds to the first CORESET.

As a possible implementation, the first indication information is a second MAC CE and first DCI; in which the second MAC CE is configured to indicate a plurality of activated TCI state indexes; and the first DCI is configured to indicate a TCI state index corresponding to the initial beam of the second TRP, and the TCI state index is one TCI state index of the plurality of activated TCI state indexes included in the second MAC CE.

As a possible implementation, the first receiving beam corresponds to the first TRP, and the second receiving beam corresponds to an update beam of the second TRP; or the first receiving beam corresponds to the second TRP, and the second receiving beam corresponds to an update beam of the second TRP.

As a possible implementation, the first indication information is a third MAC CE;
in which, the third MAC CE is configured to indicate an ID of a second CORESET associated with the second TRP and a TCI state index corresponding to the update beam of the second TRP, and the update beam of the second TRP corresponds to the second CORESET.

As a possible implementation, the first indication information is a fourth MAC CE and second DCI;
in which, the fourth MAC CE is configured to indicate a plurality of activated TCI state indexes; and
the second DCI is configured to indicate a TCI state index corresponding to the update beam of the second TRP, and the TCI state index is one TCI state index of the plurality of activated TCI state indexes included in the fourth MAC CE.

As a possible implementation, the plurality of TCI state indexes carried in the fourth MAC CE include a TCI state index corresponding to an initial beam of the second TRP.

As a possible implementation, the first DCI and the second DCI include a target indication field, and the target indication field is configured to indicate a TRP ID and/or a CORESET pool index corresponding to the TCI state index.

As a possible implementation, in the first DCI and the second DCI, each TCI state index corresponds to a preset TRP ID and/or a CORESET pool index.

As a possible implementation, a TRP ID and/or a CORESET pool index corresponding to the TCI state index in either the first DCI or the second DCI is a TRP ID and/or a CORESET pool index indicated by the MAC CE that activates the TCI state index.

As a possible implementation, the first receiving beam is an initial receiving beam corresponding to a CORESET CORESET#0 associated with the first TRP.

As a possible implementation, the network device further includes:
sending second indication information to the terminal device using a sending beam corresponding to a known receiving beam of the terminal device;
in which, the second indication information is configured to indicate the first receiving beam of the terminal device, and the known receiving beam corresponds to the first TRP.

As a possible implementation, the known receiving beam corresponds to a CORESET CORESET#0 associated with the first TRP; or the known receiving beam corresponds to a third CORESET associated with the first TRP, and is indicated by third indication information sent through the CORESET CORESET#0 associated with the first TRP.

As a possible implementation, at least one MAC CE of the first MAC CE, the second MAC CE, the third MAC CE and the fourth MAC CE includes:
one or more TCI state indexes corresponding to a TRP ID; or
one or more TCI state indexes corresponding to a CORESET pool index.

As a possible implementation, at least one MAC CE of the first MAC CE, the second MAC CE, the third MAC CE and the fourth MAC CE includes:
a plurality of TCI state indexes corresponding to a plurality of TRP IDs, in which each TCI state index corresponds to a TRP ID; or
a plurality of TCI state indexes corresponding to a plurality of CORESET pool indexes, in which each TCI state index corresponds to a CORESET pool index.

As a possible implementation, at least one MAC CE of the first MAC CE, the second MAC CE, the third MAC CE and the fourth MAC CE includes:
an indication field corresponding to at least one TCI state index, in which the indication field is configured to indicate whether the at least one TCI state index exists in the at least one MAC CE.

According to a seventh aspect of the embodiments of the disclosure, a communication system is provided. The communication system includes: a terminal device and a network device. The terminal device can implement the beam indication method of the first aspect, and the network device can implement the beam indication method of the second aspect.

According to an eighth aspect of the embodiments of the disclosure, a computer storage medium having computer-executable instructions stored thereon is provided. When the computer-executable instructions are executed by a processor, the beam indication method of the first aspect is implemented.

According to a ninth aspect of the embodiments of the disclosure, a computer storage medium having computer-executable instructions stored thereon is provided. When the computer-executable instructions are executed by a processor, the beam indication method of the second aspect is implemented.

According to a tenth aspect of the embodiments of the disclosure, a computer program product including computer programs is provided. When the computer programs are executed by a processor, the beam indication method of the first aspect or the second aspect is implemented.

The technical solutions provided by the embodiments of the disclosure may include the following technical effects.

The terminal device receives the first indication information using the first receiving beam, to determine the second receiving beam to be used for subsequent communication with the network device. The first receiving beam corresponds to the first TRP or the second TRP. According to the first indication information, the second receiving beam corresponding to the second TRP is determined, so that the second receiving beam is used for reception when subsequently receiving the signaling for indicating the beam sent by the network device using the second TRP, which achieves the indication of the receiving beam of the indication information during the communication process and improves the reception success rate of the signaling.

Additional aspects and advantages of embodiments of disclosure will be given in part in the following descriptions, become apparent in part from the following descriptions, or be learned from the practice of the embodiments of the disclosure.

### BRIEF DESCRIPTION OF THE DRAWINGS

These and other aspects and advantages of embodiments of the disclosure will become apparent and more readily appreciated from the following descriptions made with reference to the accompanying drawings, in which:
FIG. 1 is a flowchart of a beam indication method provided by an embodiment of the disclosure.
FIG. 2 is a flowchart of another beam indication method provided by an embodiment of the disclosure.
FIG. 3 is a flowchart of another beam indication method provided by an embodiment of the disclosure.
FIG. 4 is a flowchart of another beam indication method provided by an embodiment of the disclosure.
FIG. 5 is a block diagram of a beam indication apparatus provided by an embodiment of the disclosure.
FIG. 6 is a block diagram of another beam indication apparatus provided by an embodiment of the disclosure.
FIG. 7 a block diagram of a terminal device provided by an embodiment of the disclosure.
FIG. 8 a block diagram of a network device provided by an embodiment of the disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

The terms used in the disclosure are only for the purpose of describing specific embodiments, and are not intended to limit the embodiments of the disclosure. The singular forms of "a" and "the" used in the disclosure and appended claims are also intended to include plural forms, unless the context clearly indicates other meanings. It should also be understood that the term "and/or" as used herein refers to and includes any or all possible combinations of one or more associated listed items.

It should be understood that although the terms "first", "second", and "third" may be used in the embodiments of the disclosure to describe various information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if' as used herein can be interpreted as "when", "while" or "in response to determining".

The embodiments of the disclosure are described in detail below, and examples of the embodiments are illustrated in the accompanying drawings, in which the same or similar numbers indicate the same or similar elements. The embodiments described below with reference to the accompanying drawings are exemplary and are intended to be used to explain the disclosure and are not to be construed as limiting the disclosure.

A beam indication method, a beam indication apparatus and a communication device provided in this disclosure are described in detail below with reference to the accompanying drawings.

### Explanation of terms

Initial beam is a beam used for the first time by the terminal device to perform uplink and downlink transmission with a TRP.

Known beam is a beam already used by the terminal device to perform uplink and downlink transmission with the TR.

Update beam is a beam to be used by the terminal device to perform uplink and downlink transmission with the TRP.

TRP corresponds to a serving cell or a neighboring cell of the terminal device.

CORESET refers to configuration resources, used for the PDCCH to send a DCI signaling.

For a CORESET pool index, a CORESET pool index value corresponds to one or more CORESETs, each CORESET pool index corresponds to a TRP, i.e., CORESETs corresponding to different CORESET pool index values are used for PDCCHs of different TRPs.

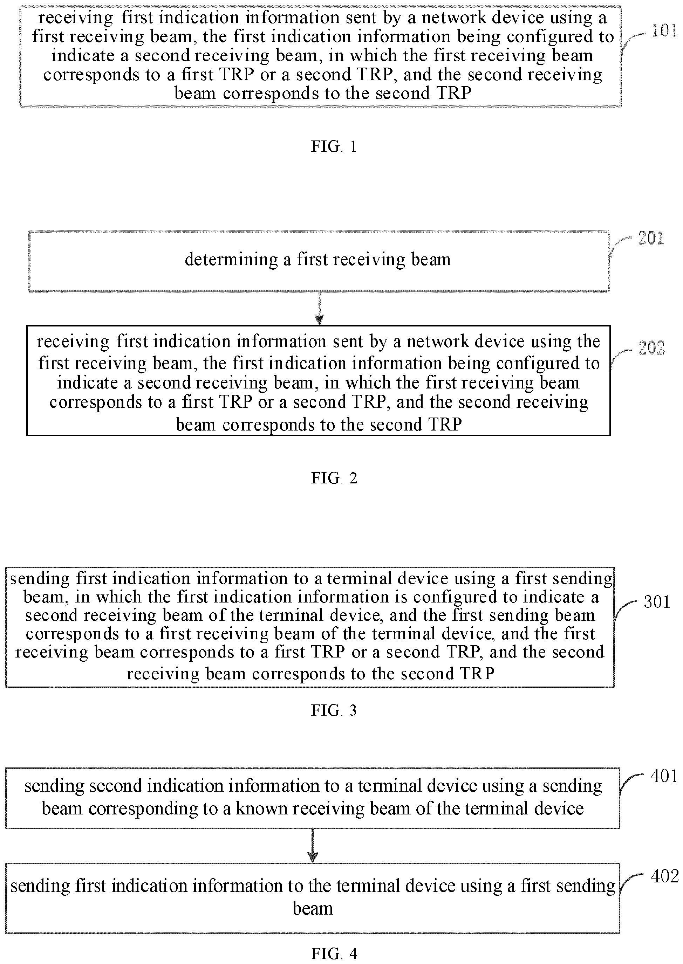

FIG. 1 is a flowchart of a beam indication method provided by an embodiment of the disclosure. The method is applicable to a terminal device.

As illustrated in FIG. 1, the method includes the following steps.

At step 101, first indication information sent by a network device is received using a first receiving beam, the first indication information is configured to indicate a second receiving beam, in which the first receiving beam corresponds to a first TRP or a second TRP, and the second receiving beam corresponds to the second TRP.

The beam indication method of the embodiments of the disclosure can be applied to any terminal device. The terminal devices may be scattered throughout the mobile communication system, and each terminal device may be stationary or mobile. The terminal device may also be referred to by those skilled in the art as mobile station, subscriber station, mobile unit, subscriber unit, wireless unit, remote unit, mobile device, terminal device, wireless device, wireless communication device, remote device, mobile user station, access user device, mobile user device, wireless user device, remote user device, handheld device, user agent, mobile client, client, in-vehicle device, wearable device, or other appropriate terms. The terminal device may be a cellular telephone, a Personal Digital Assistant (PDA), a wireless modem, a wireless communication device, a handheld device, a tablet computer, a laptop computer, a cordless phone, a Wireless Local Loop (WLL) station, etc., capable of communicating with the network device in the mobile communication system.

The network devices are deployed in the wireless access network to provide a wireless access function for the terminal device. The network device may be a Base Station (BS). The network device can communicate wirelessly with the terminal device via one or more antennas. The network device may provide communication coverage for the geographic area where it is located. The BS may be of different types, such as macro BS, micro BS, relay station, access point, etc. In some embodiments, the BS may be referred to by those skilled in the art as BS transceiver, wireless BS, access point, wireless transceiver, Basic Service Set (BSS), Extended Service Set (ESS), NodeB, evolved NodeB (eNB or eNodeB), or other appropriate terms. For example, in a 5G system, BS is referred to as gNB. For ease of description, the above devices that provide wireless communication functions to the terminal devices are collectively referred to as network devices in the embodiments of the disclosure.

In the embodiment, the terminal device receives the first indication information using the first receiving beam, to determine the second receiving beam to be used for subsequent communication between the terminal device and the network device. The first receiving beam corresponds to the first TRP or the second TRP, which means it may be the first indication information sent by the first TRP or the first indication information sent by the second TRP that is received using the first receiving beam. As an implementation, if the first indication information is sent by the first TRP, the first TRP informs the terminal device of the subsequent second receiving beam via the first indication information, the second receiving beam corresponds to the second TRP, and the terminal device uses the second receiving beam to receive communication contents sent by the second TRP, including data on the shared channel or signaling or reference signals on the control channel. As another implementation, if the first indication information is sent by the second TRP, which means that the first receiving beam corresponds to the second TRP and the second receiving beam still corresponds to the second TRP, the second TRP informs the terminal device via the first indication information that the subsequent second sending beam is still sent by the second TRP. Correspondingly, the second TRP updates the receiving beam used by the terminal device to receive the communication contents sent by the second TRP. According to the first indication information, the second receiving beam corresponding to the second TRP is determined, so that the second receiving beam is used for reception when subsequently receiving the signaling for indicating the beam sent by the network device using the second TRP, which completes indication of the receiving beam, achieves the indication of the receiving beam of the indication information when the TRP is switched or when the TRP's own beam needs to be updated during the communication process, thereby improving the reception success rate of the signaling.

Based on the above embodiments, the terminal device uses the first receiving beam to receive the first indication information sent by the network device, and in different scenarios, the second receiving beam indicated by the first indication information corresponds to different beams of the second TRP, which may indicate the initial beam or the update beam, as explained below for each of the three different scenarios.

In a first scenario, the first receiving beam corresponds to the first TRP, and the second receiving beam corresponds to the initial beam of the second TRP. In this embodiment, the terminal device receives the first indication information sent by the network device using the first receiving beam, in which the first indication information indicates the initial beam of the second TRP. For example, the first TRP corresponds to a TRP of a serving cell, and the second TRP may correspond to a TRP of a serving cell or a neighboring cell. Since the terminal device has not carried out communication transmission with the second TRP heretofore, the terminal device does not know the initial beam for communication transmission with the second TRP, so that the first TRP is required to send indication information to indicate the initial beam.

In this scenario, the signaling for indicating the first indication information may be different, which is illustrated by two implementations below.

In an implementation of the disclosure, the first indication information is a first MAC CE.

The first MAC CE is configured to indicate an ID of a first CORESET associated with the second TRP and a TCI state index corresponding to the initial beam of the second TRP, and the initial beam of the second TRP corresponds to the first CORESET. For example, the first CORESET ID (i.e., the ID of the first CORESET) may be CORESET#1, CORESET#2, or CORESET#3, which is not limited in the embodiment.

In the embodiment, the first MAC CE activates a TCI state index corresponding to the initial beam of the second TRP, and the initial beam of the second TRP corresponds to the first CORESET, i.e., the first CORESET corresponds to an activated TCI state index. The TCI state index activated by the MAC CE can also be used for transmitting other CORESETs that belong to the same group as the first CORESET, a Physical Downlink Shared Channel (PDSCH), a Physical Uplink Shared Channel (PUSCH), a Physical Uplink Control Channel (PUCCH) or a reference signal. The reference signal includes a Channel State Information-Reference Signal (CSI-RS), a Sounding Reference Signal (SRS), a Positioning Reference Signal (PRS), a Demodulation Reference Signal (DMRS), etc. That is, the TCI state index activated by the MAC CE may correspond to a common beam.

In another implementation of the disclosure, the first indication information is a second MAC CE and first DCI. That is, the first indication information is determined based on both the second MAC CE and the first DCI.

The second MAC CE is configured to indicate a plurality of activated TCI state indexes. The first DCI is configured to indicate a TCI state index corresponding to the initial beam of the second TRP, and the TCI state index is one TCI state index of the plurality of activated TCI state indexes contained in the second MAC CE. That is, when the second MAC CE indicates that the plurality of TCI state indexes are activated, the first DCI is configured to determine a TCI state index from the plurality of activated TCI state indexes as the TCI state index corresponding to the initial beam of the second TRP. The TCI state index indicated by the DCI can also be used for transmitting other CORESETs that belong to the same group as the first CORESET, a PDSCH, a PUSCH, a PUCCH or a reference signal. The reference signal includes a CSI-RS, an SRS, a PRS, a DMRS, etc. That is, the TCI state index indicated by the DCI may correspond to a common beam.

In a second scenario, the first receiving beam used by the terminal device corresponds to the first TRP, and the second receiving beam corresponds to the update beam of the second TRP, i.e., the update beam of the second TRP is also indicated by the indication information sent by the first TRP. By considering the first scenario and the second scenario synthetically, both the initial beam of the second TRP and the update beam of the second TRP are indicated by the indication information sent by the first TRP. For example, the first TRP corresponds to the TRP of the serving cell, and the second TRP corresponds to the TRP of the serving cell or the neighboring cell.

In a third scenario, the first receiving beam used by the corresponding terminal device corresponds to the second TRP, and the subsequent receiving beam still corresponds to the second TRP, i.e., the corresponding second TRP provides an update indication for its own corresponding receiving beam, to cause an update of the corresponding receiving beam of the terminal device. Accordingly, the first receiving beam corresponds to the second TRP, and the second receiving beam corresponds to the update beam of the second TRP. By considering the first scenario and the third scenario synthetically, the initial beam of the second TRP is indicated by the indication information sent by the first TRP, and the update beam of the second TRP is indicated by the indication information sent by the second TRP. For example, the first TRP corresponds to the TRP of the serving cell, and the second TRP corresponds to the TRP of the serving cell or the neighboring cell.

In the second scenario and the third scenario, the signaling for indicating the first indication information is different, which is illustrated below by two implementations.

As an implementation, the first indication information is a third MAC CE. The third MAC CE is configured to indicate an ID of a second CORESET associated with the second TRP and a TCI state index corresponding to the update beam of the second TRP, and the update beam of the second TRP corresponds to the second CORESET. For example, the second CORESET ID (i.e., the ID of the second CORESET) may be CORESET#1, CORESET#2, or CORESET#3, which is not limited in this embodiment. The TCI state index activated by the MAC CE can also be used for transmitting other CORESETs that belong to the same group as the second CORESET, a PDSCH, a PUSCH, a PUCCH or a reference signal. The reference signal includes a CSI-RS, an SRS, a PRS, a DMRS, etc. That is, the TCI state index activated by the MAC CE may correspond to a common beam.

It is understood that the TCI state index is configured to indicate the beam, which means that the corresponding beam can be determined based on a reference signal resource indicated by the TCI state index.

It should be noted that the first CORESET ID and the second CORESET ID may be identical or different. For example, the first CORESET ID may be CORESET#0, and the second CORESET ID may be CORESET# 1. Alternatively, the first CORESET ID and the second CORESET ID may both be CORESET#0 or CORESET# 1, which is not limited in the embodiment.

As another implementation, the first indication information is a fourth MAC CE and second DCI. The fourth MAC CE is configured to indicate a plurality of activated TCI state indexes. The second DCI is configured to indicate a TCI state index corresponding to the update beam of the second TRP, and the TCI state index is one TCI state index of the plurality of activated TCI state indexes included in the fourth MAC CE. The TCI state index indicated by the DCI can also be used for transmitting other CORESETs that belong to the same group as the second CORESET, a PDSCH, a PUSCH, a PUCCH or a reference signal. The reference signal includes a CSI-RS, an SRS, a PRS, a DMRS, etc. That is, the TCI state index indicated by the DCI may correspond to a common beam.

In an implementation of the embodiment of the disclosure, at least one MAC CE of the first MAC CE, the second MAC CE, the third MAC CE and the fourth MAC CE includes:

one or more TCI state indexes corresponding to a TRP ID; or one or more TCI state indexes corresponding to a CORESET pool index.

In a second implementation of the embodiment of the disclosure, at least one MAC CE of the first MAC CE, the second MAC CE, the third MAC CE and the fourth MAC CE includes:

a plurality of TCI state indexes corresponding to a plurality of TRP IDs, in which each TCI state index has a corresponding TRP ID; or a plurality of TCI state indexes corresponding to a plurality of CORESET pool indexes, in which each TCI state index has a corresponding CORESET pool index.

In the second implementation of the embodiment of the disclosure, at least one MAC CE of the first MAC CE, the second MAC CE, the third MAC CE and the fourth MAC CE includes:

an indication field corresponding to at least one TCI state index, in which the indication field is configured to indicate whether the at least one TCI state index exists in the at least one MAC CE, for example, (first indication field), (second indication field), (active TCI field of the first TRP), and (active TCI field of the second TRP). The first indication field corresponds to the first TRP, for example, if the indication field is 0, it means that there is no TCI state index in the MAC CE (the active TCI field of the first TRP), i.e., the TCI state corresponding to the first TRP is not activated. The second indication field corresponds to the second TRP, for example, if the indication field is 1, it means that there is a TCI state index in the MAC CE (the active TCI field of the second TRP), i.e., the TCI state corresponding to the second TRP is activated.

In the embodiment of the disclosure, if the MAC CE indicates a plurality of activated TCI state indexes, when indicating the initial beam of the second TRP, a MAC CE for indicating the plurality of TCI state indexes and DCI for indicating a TCI state index corresponding to the initial beam of the second TRP are required. Further, when it is further required to indicate the update beam of the second TRP, another MAC CE for indicating the plurality of TCI state indexes and DCI for indicating a TCI state index corresponding to the update beam of the second TRP are required. That is, after the initial beam of the second TRP is indicated, the subsequent update beam is further indicated, two MAC CEs are required. In order to save the signaling overhead, the MAC CEs can be combined.

As an implementation, the plurality of activated TCI state indexes carried in the fourth MAC CE include a TCI state index corresponding to the initial beam of the second TRP. That is, the plurality of activated TCI state indexes carried in the fourth MAC CE at least include a TCI state index corresponding to the initial beam and a TCI state index corresponding to the update beam. Therefore, when it is required to indicate the initial beam of the second TRP, only the DCI needs to be sent to indicate the TCI state index corresponding to the initial beam of the second TRP from the plurality of activated TCI state indexes carried in the fourth MAC CE. Alternatively, no DCI is required to indicate the initial beam of the second TRP, a specified TCI state index in the plurality of activated TCI state indexes carried in the fourth MAC CE can be directly determined as the initial beam of the second TRP. For example, the TCI state index with the smallest TCI state index value is determined as the specified TCI state index. Alternatively, the fourth MAC CE provides a mapping relation between codepoints of a TCI indication field of the DCI and TCI state combinations. The TCI state combination contains 1 or 2 TCI states, and the specified TCI state index is a TCI state index in the TCI state combination corresponding to a specified DCI codepoint. For example, the specified DCI codepoint is a codepoint with the smallest codepoint value. When it is required to indicate the update beam of the second TRP subsequently, another DCI is sent to indicate one TCI state index of the plurality of activated TCI state indexes in the fourth MAC CE that corresponds to the update beam of the second TRP. By using one MAC CE to represent the MAC CE for indicating the initial beam and the MAC CE for indicating the update beam, the MAC CE overload is saved and the system cost is reduced.

In the embodiment of the disclosure, in some scenarios, the first receiving beam corresponds to the first TRP, and the second receiving beam corresponds to the initial beam of the second TRP. In another scenario, the first receiving beam corresponds to the first TRP, and the second receiving beam corresponds to the update beam of the second TRP. In these two scenarios, when the MAC CE is configured to indicate the plurality of activated TCI state indexes, the DCI is required to indicate one TCI state index from the plurality of activated TCI state indexes and indicate whether the TCI state index corresponds to the first TRP or the second TRP, to improve the indication efficiency and accuracy. In the following, the embodiment is illustrated in detail by the following three implementations.

As a first implementation, the first DCI and the second DCI each includes a target indication field, and the target indication field is configured to indicate a TRP ID and/or a CORESET pool index corresponding to the TCI state index. That is, the target indication field indicates which TRP and/or CORESET pool corresponds to the TCI state index. Each CORESET pool index has a correspondence with a TRP. After determining the CORESET pool index, the corresponding TRP can be determined, for example, which may be the first TRP or the second TRP.

As a second implementation, in the first DCI and the second DCI, each TCI state index corresponds to a preset TRP ID and/or a CORESET pool index. That is, different TCI state indexes have respective TRP IDs corresponding thereto, i.e., different TRP IDs correspond to different TCI state indexes. For example, if the TCI state indexes corresponding to the first TRP are 1 and 2, the TCI state indexes corresponding to the second TRP are 3 and 4. Therefore, according to a preset TRP ID corresponding to the TCI state index, it can be determined which TRP is the corresponding TRP, for example, the first TRP or the second TRP. Alternatively, different TCI state indexes have respective CORESET pool indexes corresponding thereto, according to a preset CORESET pool index corresponding to the TCI state index, it can be determined which TRP is the corresponding TRP, for example, the first TRP or the second TRP. There is a correspondence between CORESET pool indexes and TRPs, if the CORESET pool index is determined, it can be determined which TRP is the corresponding TRP, for example, the first TRP or the second TRP.

As a third implementation, a TRP ID and/or a CORESET pool index corresponding to the TCI state index in either the first DCI or the second DCI is a TRP ID and/or a CORESET pool index indicated by the MAC CE that activates the TCI state index.

Taking the first DCI as an example, in an implementation, the TRP ID corresponding to the TCI state index in the first DCI is the TRP ID indicated by the MAC CE that activates the TCI state index. That is, the MAC CE indicates the TRP ID. As an implementation, in a MAC CE format, the bit locations for activating the TCI state indexes of different TRPs are set differently. Based on the bit location, the TRP to which the activated TCI state index belongs can be determined. As a second implementation, the CORESET pool index corresponding to the first DCI is the CORESET pool index indicated by the MAC CE that activates the TCI state index. As a third implementation, the MAC CE format contains a CORESET ID, and each CORESET ID corresponds to a unique CORESET pool index, so that the TRP corresponding to the TCI state index can be determined based on the CORESET ID. As a fourth implementation, different bit values can also be set to indicate whether to activate a TCI state index of a respective TRP and a TRP of which the TCI state index is activated.

FIG. 2 is a flowchart of another beam indication method provided by an embodiment of the disclosure. The method is applicable to a terminal device. As illustrated in FIG. 2, the method includes the following steps.

At step 201, a first receiving beam is determined.

As an implementation of the embodiment of the disclosure, the first receiving beam is an initial receiving beam of a CORESET CORESET#0 associated with a first TRP. The initial receiving beam is a beam used for the first time by the terminal device to perform uplink and downlink transmission with the first TRP. The initial receiving beam of the CORESET#0 associated with the first TRP may be determined by the terminal device based on a detected Reference Signal Receiving Power (RSRP) value of a Synchronization Signal and PBCH Block (SSB) sent by the network device. If the terminal device detects that the RSRP value exceeds a threshold, it initiates random access using a Physical Random Access Channel (PRACH) resource corresponding to the SSB, i.e., the receiving beam corresponding to the SSB is used as the initial receiving beam of the CORESET#0, so that the first receiving beam is determined.

As another implementation of the embodiment of the disclosure, a known receiving beam corresponding to the first TRP is used to receive second indication information. The second indication information is configured to indicate the first receiving beam. That is, the known receiving beam corresponding to the first TRP is used to receive the second indication information, which indicates the first receiving beam.

The known receiving beam is a beam already employed by the terminal device in receiving downlink transmission sent by the first TRP. As an implementation, the known receiving beam corresponds to the CORESET#0 associated with the first TRP. That is, the known beam is the beam corresponding to the CORESET#0 determined when the RSRP value of the SSB sent by the network device is detected by the terminal device to be greater than the threshold. As another implementation, the known receiving beam corresponding to the third CORESET associated with the first TRP is indicated by third indication information sent using the CORESET#0 associated with the first TRP.

At step 202, first indication information sent by a network device is received using the first receiving beam, in which the first indication information is configured to indicate a second receiving beam, and the first receiving beam corresponds to a first TRP or a second TRP, and the second receiving beam corresponds to the second TRP.

Step 202 may be explained with reference to any of the preceding embodiments and has the same principle, which will not be repeated here.

In the beam indication method of the embodiment, the terminal device receives the first indication information using the first receiving beam, to determine the second receiving beam to be used for subsequent communication between the terminal device and the network device. The first receiving beam corresponds to the first TRP or the second TRP, i.e. the first receiving beam can be the receiving beam used when receiving the first indication information sent by the first TRP, or the receiving beam used when receiving the first indication information sent by the second TRP. According to the first indication information, the second receiving beam corresponding to the second TRP is determined, so that the second receiving beam is used for reception when subsequently receiving the indication signaling sent by the network device using the second TRP, which completes the indication of the receiving beam and improves the reception success rate of the signaling.

FIG. 3 is a flowchart of another beam indication method provided by an embodiment of the disclosure. The method is applicable to a network device.

As illustrated in FIG. 3, the method includes the following steps.

At step 301, first indication information is sent to a terminal device using a first sending beam, in which the first indication information is configured to indicate a second receiving beam of the terminal device, and the first sending beam corresponds to a first receiving beam of the terminal device, the first receiving beam corresponds to a first TRP or a second TRP, and the second receiving beam corresponds to the second TRP.

The beam indication method of the embodiment of the disclosure can be applied to any network device. The network devices are deployed in the wireless access network to provide a wireless access function for the terminal device. The network device may be a BS. The network device can communicate wirelessly with the terminal device via one or more antennas. The network device may provide communication coverage for the geographic area where it is located. The BS may be of different types, such as macro BS, micro BS, relay station, access point, etc. In some embodiments, the BS may be referred to by those skilled in the art as BS transceiver, wireless BS, access point, wireless transceiver, BSS, ESS, NodeB, evolved NodeB (eNB or eNodeB), or other appropriate terms. For example, in a 5G system, BS is referred to as gNB. For ease of description, the above devices that provide wireless communication functions to the terminal devices are collectively referred to as network devices in the embodiments of the disclosure.

The terminal devices may be scattered throughout the mobile communication system, and each terminal device may be stationary or mobile. The terminal device may also be referred to by those skilled in the art as mobile station, subscriber station, mobile unit, subscriber unit, wireless unit, remote unit, mobile device, terminal device, wireless device, wireless communication device, remote device, mobile user station, access user device, mobile user device, wireless user device, remote user device, handheld device, user agent, mobile client, client, in-vehicle device, wearable device, or other appropriate terms. The terminal device may be a cellular telephone, a PDA, a wireless modem, a wireless communication device, a handheld device, a tablet computer, a laptop computer, a cordless phone, a WLL station, etc., capable of communicating with the network device in the mobile communication system.

In the embodiment, the network device sends the first indication information to the terminal device using the first sending beam, to cause the terminal device to determine the second receiving beam based on the first indication information. The second receiving beam is the receiving beam used by the terminal device to communicate with the network device again after receiving the first indication information.

In the embodiment, the first sending beam corresponds to the first receiving beam of the terminal device. The first receiving beam corresponds to the first TRP or the second TRP. That is, the first receiving beam is used to receive either the first indication information sent by the first TRP or the first indication information sent by the second TRP. As an implementation, if the first indication information is sent by the first TRP, the first TRP informs the terminal device of the subsequent second receiving beam by means of the first indication information, and the second receiving beam corresponds to the second TRP. As another implementation, if the first indication information is sent by the second TRP, which means that the first receiving beam corresponds to the second TRP and the second receiving beam still corresponds to the second TRP, the corresponding terminal device updates the receiving beam used in receiving the communication contents sent by the second TRP. According to the first indication information, the second receiving beam of the terminal device is determined, so that the terminal device uses the second receiving beam for reception when subsequently the network device uses the second TRP to send the signaling for indicating the beam, which completes the indication of the receiving beam of the terminal device, achieves beam handover when the TRP is switched or the the TRP's own sending beam needs to be updated during the communication process, thereby improving the reception success rate of the signaling.

Based on the above embodiment, the network device sends the first indication information to the terminal device using the first sending beam, and in different scenarios, the first receiving beam corresponds to the first TRP or the second TRP, while the second sending beam indicated by the first indication information corresponds to different beams of the second TRP, which may be either the initial beam or the update beam, as explained below for each of the three different scenarios.

In a first scenario, the first receiving beam corresponds to a beam of the first TRP, and the second receiving beam corresponds to the initial beam of the second TRP. In this embodiment, the network device sends the first indication information to the terminal device using the first sending beam of the first TRP, in which the first indication information indicates the initial beam of the second TRP. For example, the first TRP corresponds to the TRP of the serving cell, and the second TRP may correspond to the TRP of the serving cell or the neighboring cell. Since the terminal device has not carried out communication transmission with the second TRP heretofore, the terminal device does not know the initial beam for communication transmission with the second TRP, so that the first TRP is required to send the first indication information to indicate the initial beam.

In this scenario, the signaling for indicating the first indication information is different, which is illustrated by two implementations below.

In an implementation of the disclosure, the first indication information is a first MAC CE.

The first MAC CE is configured to indicate an ID of a first CORESET (also called as the first CORESET ID) associated with the second TRP and a TCI state index corresponding to the initial beam of the second TRP, and the initial beam of the second TRP corresponds to the first CORESET. For example, the first CORESET ID may be CORESET#1, CORESET#2, or CORESET#3, which is not limited in the embodiment.

In the embodiment, the first MAC CE activates a TCI state index corresponding to the initial beam of the second TRP, and the initial beam of the second TRP corresponds to the first CORESET, i.e., the first CORESET corresponds to an activated TCI state index. The TCI state index activated by the MAC CE can also be used for transmitting other CORESETs that belong to the same group as the first CORESET, a PDSCH, a PUSCH, a PUCCH or a reference signal. The reference signal includes a CSI-RS, an SRS, a PRS, a DMRS, etc. That is, the TCI state index activated by the MAC CE may correspond to a common beam.

In another implementation of the disclosure, the first indication information is a second MAC CE and first DCI. That is, the first indication information is determined based on both the second MAC CE and the first DCI.

The second MAC CE is configured to indicate a plurality of activated TCI state indexes. The first DCI is configured to indicate a TCI state index corresponding to the initial beam of the second TRP, and the TCI state index is one TCI state index of the plurality of activated TCI state indexes contained in the second MAC CE. That is, when the second MAC CE indicates that the plurality of TCI state indexes are activated, the first DCI is configured to determine a TCI state index from the plurality of activated TCI state indexes as the TCI state index corresponding to the initial beam of the second TRP. The TCI state index indicated by the DCI can also be used for transmitting other CORESETs that belong to the same group as the first CORESET, a PDSCH, a PUSCH, a PUCCH or a reference signal. The reference signal includes a CSI-RS, an SRS, a PRS, a DMRS, etc. That is, the TCI state index indicated by the DCI may correspond to a common beam.

In a second scenario, the first receiving beam corresponds to a beam of the first TRP, and the second receiving beam corresponds to the update beam of the second TRP, i.e., the update beam of the second TRP is also indicated by the indication information sent by the first TRP. By considering the first scenario and the second scenario synthetically, both the initial beam of the second TRP and the update beam of the second TRP are indicated by the first indication information sent by the first TRP. For example, the first TRP corresponds to the TRP of the serving cell, and the second TRP corresponds to the TRP of the serving cell or the neighboring cell.

In a third scenario, the corresponding second TRP provides an update indication for its own corresponding receiving beam. Accordingly, the first receiving beam corresponds to the second TRP, and the second receiving beam corresponds to the update beam of the second TRP. By considering the first scenario and the third scenario synthetically, the initial beam of the second TRP is indicated by the first indication information sent by the first TRP, and the update beam of the second TRP is indicated by the first indication information sent by the second TRP. For example, the first TRP corresponds to the TRP of the serving cell, and the second TRP corresponds to the TRP of the serving cell or the neighboring cell.

In the second scenario and the third scenario, the signaling for indicating the first indication information is different, which is illustrated below by two implementations.

As an implementation, the first indication information is a third MAC CE. The third MAC CE is configured to indicate an ID of a second CORESET (also called as second CORESET ID) associated with the second TRP and a TCI state index corresponding to the update beam of the second TRP, and the update beam of the second TRP corresponds to the second CORESET. For example, the second CORESET ID may be CORESET#1, CORESET#2, or CORESET#3, which is not limited in this embodiment. The TCI state index activated by the MAC CE can also be used for transmitting other CORESETs that belong to the same group as the second CORESET, a PDSCH, a PUSCH, a PUCCH or a reference signal. The reference signal includes a CSI-RS, an SRS, a PRS, a DMRS, etc. That is, the TCI state index activated by the MAC CE may correspond to a common beam.

It is understood that the TCI state index is configured to indicate the beam, which means that the corresponding beam can be determined based on a reference signal resource indicated by the TCI state index.

It should be noted that the first CORESET ID and the second CORESET ID may be identical or different. For example, the first CORESET ID may be CORESET#0, and the second CORESET ID may be CORESET# 1. Alternatively, the first CORESET ID and the second CORESET ID may both be CORESET#0 or CORESET#1, which is not limited in the embodiment.

As another implementation, the first indication information is a fourth MAC CE and second DCI. The fourth MAC CE is configured to indicate a plurality of activated TCI state indexes. The second DCI is configured to indicate a TCI state index corresponding to the update beam of the second TRP, and the TCI state index is one TCI state index of the plurality of activated TCI state indexes included in the fourth MAC CE. The TCI state index indicated by the DCI can also be used for transmitting other CORESETs that belong to the same group as the second CORESET, a PDSCH, a PUSCH, a PUCCH or a reference signal. The reference signal includes a CSI-RS, an SRS, a PRS, a DMRS, etc. That is, the TCI state index indicated by the DCI may correspond to a common beam.

In an implementation of the embodiment of the disclosure, at least one MAC CE of the first MAC CE, the second MAC CE, the third MAC CE and the fourth MAC CE includes:
one or more TCI state indexes corresponding to a TRP ID; or one or more TCI state indexes corresponding to a CORESET pool index.

In a second implementation of the embodiment of the disclosure, at least one MAC CE of the first MAC CE, the second MAC CE, the third MAC CE and the fourth MAC CE includes:
a plurality of TCI state indexes corresponding to a plurality of TRP IDs, in which each TCI state index corresponds to a TRP ID; or a plurality of TCI state indexes corresponding to a plurality of CORESET pool indexes, in which each TCI state index corresponds to a CORESET pool index.

In the second implementation of the embodiment of the disclosure, at least one MAC CE of the first MAC CE, the second MAC CE, the third MAC CE and the fourth MAC CE includes:
an indication field corresponding to at least one TCI state index, in which the indication field is configured to indicate whether the at least one TCI state index exists in the at least one MAC CE, for example, (first indication field), (second indication field), (active TCI field of the first TRP), and (active TCI field of the second TRP). The first indication field corresponds to the first TRP, if the indication field is 0, it means that there is no TCI state index in the MAC CE (the active TCI field of the first TRP), i.e., the TCI state corresponding to the first TRP is not activated. The second indication field corresponds to the second TRP, if the indication field is 1, it means that there is a TCI state index in the MAC CE (the active TCI field of the second TRP), i.e., the TCI state corresponding to the second TRP is activated.

In the embodiment of the disclosure, if the MAC CE indicates a plurality of activated TCI state indexes, when indicating the initial beam of the second TRP, a MAC CE for indicating the plurality of TCI state indexes and DCI for indicating a TCI state index corresponding to the initial beam of the second TRP are required. Further, when it is further required to indicate the update beam of the second TRP, another MAC CE for indicating the plurality of TCI state indexes and DCI for indicating a TCI state index corresponding to the update beam of the second TRP are required. That is, after the initial beam of the second TRP is indicated, the subsequent update beam is further indicated, two MAC CEs are required. In order to save the signaling overhead, the MAC CEs can be combined.

As an implementation, the plurality of activated TCI state indexes carried in the fourth MAC CE include a TCI state index corresponding to the initial beam of the second TRP. That is, the plurality of activated TCI state indexes carried in the fourth MAC CE at least include a TCI state index corresponding to the initial beam and a TCI state index corresponding to the update beam. Therefore, when it is required to indicate the initial beam of the second TRP, only the DCI needs to be sent to indicate the TCI state index corresponding to the initial beam of the second TRP from the plurality of activated TCI state indexes carried in the fourth MAC CE. Alternatively, no DCI is required to indicate the initial beam of the second TRP, a specified TCI state index in the plurality of activated TCI state indexes carried in the fourth MAC CE can be directly determined as the initial beam of the second TRP. For example, the TCI state index with the smallest TCI state index value is determined as the specified TCI state index. Alternatively, the fourth MAC CE provides a mapping relation between codepoints of a TCI indication field of the DCI and TCI state combinations. The TCI state combination contains 1 or 2 TCI states, and the specified TCI state index is a TCI state index in the TCI state combination corresponding to a specified DCI codepoint. For example, the specified DCI codepoint is a codepoint with the smallest codepoint value. When the update beam of the second TRP needs to be indicated subsequently, another DCI is sent to indicate one TCI state index of the plurality of activated TCI state indexes in the fourth MAC CE that corresponds to the update beam of the second TRP. By representing the MAC CE for indicating the initial beam and the MAC CE for indicating the update beam through one MAC CE, the MAC CE overload is saved and the system cost is reduced.

In the embodiment of the disclosure, in some scenarios, the first receiving beam corresponds to the first TRP, and the second receiving beam corresponds to the initial beam of the second TRP. In another scenario, the first receiving beam corresponds to the first TRP, and the second receiving beam corresponds to the update beam of the second TRP. In these two scenarios, when the MAC CE is configured to indicate the plurality of activated TCI state indexes, the DCI is required to indicate one TCI state index from the plurality of activated TCI state indexes and indicate whether the TCI state index corresponds to the first TRP or the second TRP, to improve the indication efficiency and accuracy. In the following, the embodiment is illustrated in detail by the following three implementations.

As a first implementation, the first DCI and the second DCI include a target indication field, and the target indication field is configured to indicate a TRP ID and/or a CORESET pool index corresponding to the TCI state index. That is, the target indication field indicates which TRP and/or CORESET pool corresponds to the TCI state index. Each CORESET pool index has a correspondence with a TRP. After determining the CORESET pool index, the corresponding TRP can be determined, for example, which may be the first TRP or the second TRP.

As a second implementation, in the first DCI and the second DCI, each TCI state index corresponds to a preset TRP ID and/or a CORESET pool index. That is, different TCI state indexes correspond to respective TRP IDs, i.e., different TRP IDs correspond to different TCI state indexes. For example, if the TCI state indexes corresponding to the first TRP are 1 and 2, the TCI state indexes corresponding to the second TRP are 3 and 4. Therefore, according to a preset TRP ID corresponding to the TCI state index, it can be determined which TRP is the corresponding TRP, for example, the first TRP or the second TRP. Alternatively, different TCI state indexes correspond to respective CORESET pool indexes, according to a preset CORESET pool index corresponding to the TCI state index, it can be determined which TRP is the corresponding TRP, for example, the first TRP or the second TRP. There is a correspondence between CORESET pool indexes and TRPs, if the CORESET pool index is determined, it can be determined which TRP is the corresponding TRP, for example, the first TRP or the second TRP.

As a third implementation, a TRP ID and/or a CORESET pool index corresponding to the TCI state index in either the first DCI or the second DCI is a TRP ID and/or a CORESET pool index indicated by the MAC CE that activates the TCI state index.

Taking the first DCI as an example, as an implementation, the TRP ID corresponding to the TCI state index in the first DCI is the TRP ID indicated by the MAC CE that activates the TCI state index. That is, the MAC CE indicates the TRP ID. As an implementation, in a MAC CE format, the bit locations for activating the TCI state indexes of different TRPs are set differently. Based on the bit location, the TRP to which the activated TCI state index belongs can be determined. As a second implementation, the CORESET pool index corresponding to the first DCI is the CORESET pool index indicated by the MAC CE that activates the TCI state index. As a third implementation, the MAC CE format contains a CORESET ID, and each CORESET ID corresponds to a unique CORESET pool index, so that the TRP corresponding to the TCI state index can be determined based on the CORESET ID. As a fourth implementation, different bit values can also be set to indicate whether to activate a TCI state index of a respective TRP and a TRP of which the TCI state index is activated.

In the embodiment of the disclosure, the first indication information is sent to the terminal device using the first sending beam, in which the first sending beam corresponds to the first receiving beam, that is, the terminal device receives the first indication information using the first receiving beam. With respect to the method for determining the first receiving beam used by the terminal device, as an implementation of the embodiment of the disclosure, the first receiving beam is the initial receiving beam corresponding to the CORESET#0 associated with the first TRP. The initial receiving beam is the beam used for the first time by the terminal device to perform uplink and downlink transmission with the first TRP. The initial receiving beam corresponding to the CORESET#0 associated with the first TRP may be determined by the terminal device based on the detected RSRP value of the SSB sent by the network device. If the terminal device detects that the RSRP value exceeds the threshold, it initiates random access using a PRACH resource corresponding to the SSB, i.e., the receiving beam corresponding to the SSB is used as the initial receiving beam of the CORESET#0, so that the first receiving beam is determined.

FIG. 4 is a flowchart of another beam indication method provided by an embodiment of the disclosure. The method is applicable to a network device. Another method for indicating a first receiving beam of a terminal device is illustrated. As illustrated in FIG. 2, the method includes the following steps.

At step 401, second indication information is sent to the terminal device using a sending beam corresponding to a known receiving beam of the terminal device.

The second indication information is configured to indicate the first receiving beam of the terminal device, and the known receiving beam corresponds to the first TRP.

In the embodiment of the disclosure, the known receiving beam is a beam already employed by the terminal device when the first TRP sends downlink transmission to the terminal device. As an implementation, the known receiving beam corresponds to the CORESET#0 associated with the first TRP. That is, the known receiving beam is the beam corresponding to the CORESET#0 determined when the RSRP value of the SSB sent by the network device is detected by the terminal device to be greater than the threshold. As another implementation, the known receiving beam corresponding to the third CORESET associated with the first TRP is indicated by third indication information sent using the CORESET#0 associated with the first TRP.

At step 402, first indication information is sent to the terminal device using a first sending beam.

Step 402 may be explained with reference to any of the preceding embodiments and has the same principle, which will not be repeated here.

In the beam indication method of the embodiment, the network device sends the first indication information to the terminal device using the first sending beam, to determine the second receiving beam to be used by the terminal device when the terminal device communicates with the network device subsequently. The first receiving beam corresponds to the first TRP or second TRP, and the second receiving beam corresponds to the second TRP. When the network device subsequently uses the second TRP to send the signaling for indicating the beam, the terminal device uses the second receiving beam to receive the signaling, which completes the indication of the receiving beam of the terminal device and improves the reception success rate of the signaling.

Corresponding to the beam indication method provided in the above embodiments, the disclosure also provides a beam indication apparatus. Since the beam indication apparatus provided in the embodiments of the disclosure corresponds to the method provided in the above embodiments, the implementations of the beam indication method are also applicable to the beam indication apparatus provided in the embodiment and will not be described in detail in the embodiment.

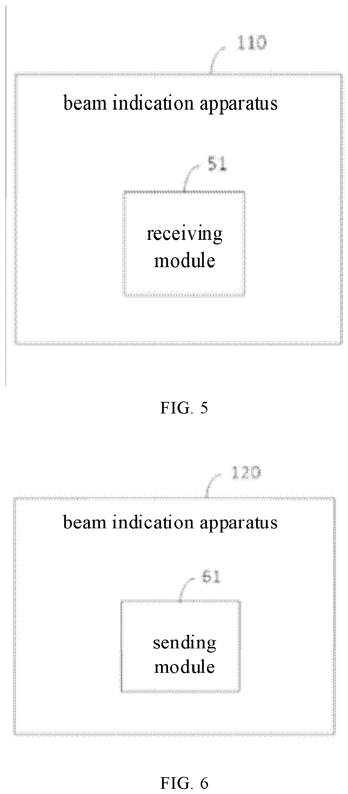

FIG. 5 is a block diagram of a beam indication apparatus 110 provided by an embodiment of the disclosure. The apparatus is applicable to a terminal device.

As illustrated in FIG. 5, the beam indication apparatus 110 includes: a receiving module 51.

The receiving module 51 is configured to receive first indication information sent by a network device using a first receiving beam, the first indication information being configured to indicate a second receiving beam.

The first receiving beam corresponds to a first TRP or a second TRP, and the second receiving beam corresponds to the second TRP.

Further, as a possible implementation, the first receiving beam corresponds to the first TRP, and the second receiving beam corresponds to an initial beam of the second TRP.

As a possible implementation, the first indication information is a first MAC CE.

The first MAC CE is configured to indicate an ID of a first CORESET associated with the second TRP and a TCI state index corresponding to the initial beam of the second TRP, and the initial beam of the second TRP corresponds to the first CORESET.

As a possible implementation, the first indication information is a second MAC CE and first DCI.

The second MAC CE is configured to indicate a plurality of activated TCI state indexes.

The first DCI is configured to indicate a TCI state index corresponding to the initial beam of the second TRP, and the TCI state index is one TCI state index of the plurality of activated TCI state indexes included in the second MAC CE.

As a possible implementation, the first receiving beam corresponds to the first TRP, and the second receiving beam corresponds to an update beam of the second TRP; or

the first receiving beam corresponds to the second TRP, and the second receiving beam corresponds to an update beam of the second TRP.

As a possible implementation, the first indication information is a third MAC CE.

The third MAC CE is configured to indicate an ID of a second CORESET associated with the second TRP and a TCI state index corresponding to the update beam of the second TRP, and the update beam of the second TRP corresponds to the second CORESET.

As a possible implementation, the first indication information is a fourth MAC CE and second DCI.

The fourth MAC CE is configured to indicate a plurality of activated TCI state indexes.

The second DCI is configured to indicate a TCI state index corresponding to the update beam of the second TRP, and the TCI state index is one TCI state index of the plurality of activated TCI state indexes included in the fourth MAC CE.

As a possible implementation, the plurality of activated TCI state indexes carried in the fourth MAC CE include a TCI state index corresponding to an initial beam of the second TRP.

As a possible implementation, the first DCI and the second DCI include a target indication field, and the target indication field is configured to indicate a TRP ID and/or a CORESET pool index corresponding to the TCI state index.

As a possible implementation, in the first DCI and the second DCI, each TCI state index corresponds to a preset TRP ID and/or a CORESET pool index.

As a possible implementation, a TRP ID and/or a CORESET pool index corresponding to the TCI state index in either the first DCI or the second DCI is a TRP ID and/or a CORESET pool index indicated by the MAC CE that activates the TCI state index.

As a possible implementation, the apparatus further includes:
a determining module, configured to determine the first receiving beam;
in which, the first receiving beam is an initial receiving beam of a CORESET CORESET#0 associated with the first TRP.

As a possible implementation, the receiving module 51 is further configured to:
receive second indication information using a known receiving beam corresponding to the first TRP, in which the second indication information is configured to determine the first receiving beam.

As a possible implementation, the known receiving beam corresponds to a CORESET CORESET#0 associated with the first TRP; or the known receiving beam corresponds to a third CORESET associated with the first TRP, and is indicated by third indication information sent using the CORESET CORESET#0 associated with the first TRP.

As a possible implementation, at least one MAC CE of the first MAC CE, the second MAC CE, the third MAC CE and the fourth MAC CE includes:
one or more TCI state indexes corresponding to a TRP ID; or
one or more TCI state indexes corresponding to a CORESET pool index.

As a possible implementation, at least one MAC CE of the first MAC CE, the second MAC CE, the third MAC CE and the fourth MAC CE includes:
a plurality of TCI state indexes corresponding to a plurality of TRP IDs, in which each TCI state index corresponds to a TRP ID; or
a plurality of TCI state indexes corresponding to a plurality of CORESET pool indexes, in which each TCI state index corresponds to a CORESET pool index.

As a possible implementation, at least one MAC CE of the first MAC CE, the second MAC CE, the third MAC CE and the fourth MAC CE includes:
an indication field corresponding to at least one TCI state index, in which the indication field is configured to indicate whether the at least one TCI state index exists in the at least one MAC CE.

In the apparatus of the embodiment of the disclosure, the terminal device receives the first indication information using the first receiving beam, to determine the second receiving beam to be used when the terminal device subsequently communicates with the network device. The first receiving beam corresponds to the first TRP or the second TRP, i.e., the first receiving beam can be the receiving beam used when receiving the first indication information sent by the first TRP, or the receiving beam used when receiving the first indication information sent by the second TRP. According to the first indication information, the second receiving beam corresponding to the second TRP is determined, so that the second receiving beam is used for reception when receiving the indication signaling sent by the network device using the second TRP, which completes the indication of the receiving beam and improves the reception success rate of the signaling.

Corresponding to the beam indication method provided in the above embodiments, the disclosure also provides a beam indication apparatus. Since the beam indication apparatus provided in the embodiments of the disclosure corresponds to the beam indication method provided in the above embodiments, the implementations of the beam indication method are also applicable to the beam indication apparatus provided in the embodiment and will not be described in detail in the embodiment.

FIG. 6 is a block diagram of a beam indication apparatus 120 provided by an embodiment of the disclosure. The apparatus is applicable to a network device.

The beam indication apparatus 120 includes a sending module 61.

The sending module 61 is configured to send first indication information to a terminal device using a first sending beam.

The first indication information is configured to indicate a second receiving beam of the terminal device, and the first sending beam corresponds to a first receiving beam of the terminal device; and the first receiving beam corresponds to a first TRP or a second TRP, and the second receiving beam corresponds to the second TRP.

Further, as a possible implementation, the first receiving beam is a beam of the first TRP, and the second receiving beam is an initial beam of the second TRP.

As a possible implementation, the first indication information is a first MAC CE; in which the first MAC CE is configured to indicate an ID of a first CORESET associated with the second TRP and a TCI state index corresponding to the initial beam of the second TRP, and the initial beam of the second TRP corresponds to the first CORESET.

As a possible implementation, the first indication information is a second MAC CE and first DCI; in which the second MAC CE is configured to indicate a plurality of activated TCI state indexes; and the first DCI is configured to indicate a TCI state index corresponding to the initial beam of the second TRP, and the TCI state index is one TCI state index of the plurality of activated TCI state indexes included in the second MAC CE.

As a possible implementation, the first receiving beam corresponds to the beam of the first TRP, and the second receiving beam corresponds to an update beam of the second TRP; or the first receiving beam corresponds to a beam of the second TRP, and the second receiving beam corresponds to an update beam of the second TRP.

As a possible implementation, the first indication information is a third MAC CE;
in which, the third MAC CE is configured to indicate an ID of a second CORESET associated with the second TRP and a TCI state index corresponding to the update beam of the second TRP, and the update beam of the second TRP corresponds to the second CORESET.

As a possible implementation, the first indication information is a fourth MAC CE and second DCI;
in which, the fourth MAC CE is configured to indicate a plurality of activated TCI state indexes; and
the second DCI is configured to indicate a TCI state index corresponding to the update beam of the second TRP, and the TCI state index is one TCI state index of the plurality of activated TCI state indexes included in the fourth MAC CE.

As a possible implementation, the plurality of TCI state indexes carried in the fourth MAC CE include a TCI state index corresponding to an initial beam of the second TRP.

As a possible implementation, the first DCI and the second DCI include a target indication field, and the target indication field is configured to indicate a TRP ID and/or a CORESET pool index corresponding to the TCI state index.

As a possible implementation, in the first DCI and the second DCI, each TCI state index corresponds to a preset TRP ID and/or a CORESET pool index.

As a possible implementation, a TRP ID and/or a CORESET pool index corresponding to the TCI state index in either the first DCI or the second DCI is a TRP ID and/or a CORESET pool index indicated by the MAC CE that activates the TCI state index.

As a possible implementation, the first receiving beam is an initial receiving beam corresponding to a CORESET CORESET#0 associated with the first TRP.

As a possible implementation, the above sending module 61 is further configured to:
send second indication information to the terminal device using a sending beam corresponding to a known receiving beam of the terminal device; in which, the second indication information is configured to indicate the first receiving beam of the terminal device, and the known receiving beam corresponds to the first TRP.

As a possible implementation, the known receiving beam corresponds to a CORESET CORESET#0 associated with the first TRP; or the known receiving beam corresponds to a third CORESET associated with the first TRP, and is indicated by third indication information sent through the CORESET CORESET#0 associated with the first TRP.

As a possible implementation, at least one MAC CE of the first MAC CE, the second MAC CE, the third MAC CE and the fourth MAC CE includes:
one or more TCI state indexes corresponding to a TRP ID; or
one or more TCI state indexes corresponding to a CORESET pool index.

As a possible implementation, at least one MAC CE of the first MAC CE, the second MAC CE, the third MAC CE and the fourth MAC CE includes:
a plurality of TCI state indexes corresponding to a plurality of TRP IDs, in which each TCI state index corresponds to a TRP ID; or
a plurality of TCI state indexes corresponding to a plurality of CORESET pool indexes, in which each TCI state index corresponds to a CORESET pool index.

As a possible implementation, at least one MAC CE of the first MAC CE, the second MAC CE, the third MAC CE and the fourth MAC CE includes:
an indication field corresponding to at least one TCI state index, in which the indication field is configured to indicate whether the at least one TCI state index exists in the at least one MAC CE.

In the embodiment of the disclosure, the network device sends the first indication information to the terminal device using the first sending beam, to determine the second receiving beam to be used by the terminal device when the terminal device communicates with the network device subsequently. The first receiving beam corresponds to the first TRP or second TRP, and the second receiving beam corresponds to the second TRP. When the network device uses the second TRP to send the indication signaling subsequently, the terminal device uses the second receiving beam to receive the signaling, which improves the reception success rate of the signaling.

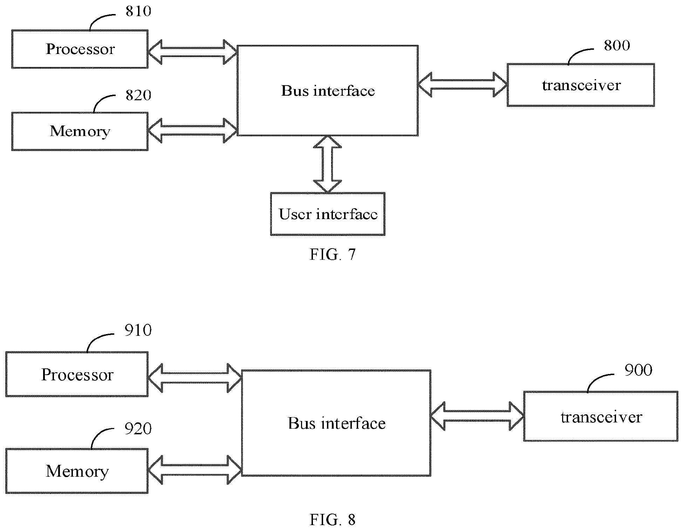

FIG. 7 a block diagram of a terminal device provided by an embodiment of the disclosure. For example, the terminal device can be a mobile phone, a computer, a digital radio user device, a message transceiver, a game console, a tablet device, a medical device, a fitness device, a PDA, etc.

As illustrated in FIG. 7, the terminal device includes: a transceiver 800, a processor 810 and a memory 820.

The memory 820 is configured to store computer programs, the transceiver 800 is configured to send and receive data under the control of the processor 810, and the processor 810 is configured to read the computer programs in the memory 820 to perform the following operations:
receiving, using a first receiving beam, first indication information sent by a network device, the first indication information being configured to indicate a second receiving beam;
in which, the first receiving beam corresponds to a first TRP or a second TRP, and the second receiving beam corresponds to the second TRP.

The transceiver 800 is configured to receive and send data under the control of the processor 810.

In FIG. 7, the bus architecture may include any number of interconnected buses and bridges. In detail, various circuits of one or more processors represented by the processor 810 and memories represented by the memory 820 are linked together. The bus architecture may also link together various other circuits such as peripheral devices, voltage regulators, and power management circuits, which are well known in the art and will not be further described herein. The bus interface provides an interface. The transceiver 800 may be a plurality of elements, including a transmitter and a receiver, providing units for communicating with various other devices on transmission media. The transmission media include a wireless channel, a wired channel, a fiber optic cable, etc. For different user devices, the user interface can also be an interface able to connect to the required devices externally or internally. The connected devices include but not limited to a keypad, a display, a speaker, a microphone, a joystick, etc.

The processor 810 is responsible for managing the bus architecture and usual processing, and the memory 820 can store the data used by the processor 810 in performing operations.

Optionally, the processor 810 may be a Central Processing Unit (CPU), an Application Specific Integrated Circuit (ASIC), a Field-Programmable Gate Array (FPGA) or Complex Programmable Logic Device (CPLD). The processor 810 can adopt a multi-core architecture.

The processor 810 is configured to execute any of the methods of FIGS. 1 to 2 provided in the embodiments of the disclosure in accordance with the obtained executable instructions by calling computer programs stored in the memory. The processor 810 and the memory 820 may also be physically separately arranged.

As a possible implementation, the first receiving beam corresponds to the first TRP, and the second receiving beam corresponds to the initial beam of the second TRP.

As a possible implementation, the first indication information is a first MAC CE;

in which, the first MAC CE is configured to indicate an ID of a first CORESET associated with the second TRP and a TCI state index corresponding to the initial beam of the second TRP, and the initial beam of the second TRP corresponds to the first CORESET.

As a possible implementation, the first indication information is a second MAC CE and first DCI;
in which, the second MAC CE is configured to indicate a plurality of activated TCI state indexes; and
the first DCI is configured to indicate a TCI state index corresponding to the initial beam of the second TRP, and the TCI state index is one TCI state index of the plurality of activated TCI state indexes included in the second MAC CE.

As a possible implementation, the first receiving beam corresponds to the first TRP, and the second receiving beam corresponds to an update beam of the second TRP; or
the first receiving beam corresponds to the second TRP, and the second receiving beam corresponds to an update beam of the second TRP.

As a possible implementation, the first indication information is a third MAC CE;
in which, the third MAC CE is configured to indicate an ID of a second CORESET associated with the second TRP and a TCI state index corresponding to the update beam of the second TRP, and the update beam of the second TRP corresponds to the second CORESET.

As a possible implementation, the first indication information is a fourth MAC CE and second DCI;
in which, the fourth MAC CE is configured to indicate a plurality of activated TCI state indexes; and
the second DCI is configured to indicate a TCI state index corresponding to the update beam of the second TRP, and the TCI state index is one TCI state index of the plurality of activated TCI state indexes included in the fourth MAC CE.

As a possible implementation, the plurality of activated TCI state indexes carried in the fourth MAC CE include a TCI state index corresponding to an initial beam of the second TRP.

As a possible implementation, the first DCI and the second DCI include a target indication field, and the target indication field is configured to indicate a TRP ID and/or a CORESET pool index corresponding to the TCI state index.

As a possible implementation, in the first DCI and the second DCI, each TCI state index corresponds to a preset TRP ID and/or a CORESET pool index.

As a possible implementation, a TRP ID and/or a CORESET pool index corresponding to the TCI state index in either the first DCI or the second DCI is a TRP ID and/or a CORESET pool index indicated by the MAC CE that activates the TCI state index.

As a possible implementation, the terminal device further includes:
determining the first receiving beam;
in which, the first receiving beam is an initial receiving beam of a CORESET CORESET#0 associated with the first TRP.

As a possible implementation, the terminal device further includes:
receiving second indication information using a known receiving beam corresponding to the first TRP, in which the second indication information is configured to determine the first receiving beam.

As a possible implementation, the known receiving beam corresponds to a CORESET CORESET#0 associated with the first TRP; or the known receiving beam corresponds to a third CORESET associated with the first TRP, and is indicated by third indication information sent using the CORESET CORESET#0 associated with the first TRP.

As a possible implementation, at least one MAC CE of the first MAC CE, the second MAC CE, the third MAC CE and the fourth MAC CE includes: one or more TCI state indexes corresponding to a TRP ID; or one or more TCI state indexes corresponding to a CORESET pool index.

As a possible implementation, at least one MAC CE of the first MAC CE, the second MAC CE, the third MAC CE and the fourth MAC CE includes: a plurality of TCI state indexes corresponding to a plurality of TRP IDs, in which each TCI state index corresponds to a TRP ID; or a plurality of TCI state indexes corresponding to a plurality of CORESET pool indexes, in which each TCI state index corresponds to a CORESET pool index.

As a possible implementation, at least one MAC CE of the first MAC CE, the second MAC CE, the third MAC CE and the fourth MAC CE includes: an indication field corresponding to at least one TCI state index, in which the indication field is configured to indicate whether the at least one TCI state index exists in the at least one MAC CE.

It should be noted here that the terminal device provided by the embodiment of the disclosure can realize all the method steps in the method embodiments of FIGS. 1 to 2, and can achieve the same technical effects, and the same parts and beneficial effects as those in the method embodiments are not repeated here.

FIG. 8 a block diagram of a network device provided by an embodiment of the disclosure. As illustrated in FIG. 8, the network device includes: a transceiver 900, a processor 910 and a memory 920.

The memory 920 is configured to store computer programs, the transceiver 900 is configured to send and receive data under the control of the processor 910, and the processor 910 is configured to read the computer programs in the memory 920 to perform the following operations:
sending first indication information to a terminal device using a first sending beam;
in which, the first indication information is configured to indicate a second receiving beam of the terminal device, and the first sending beam corresponds to a first receiving beam of the terminal device; and
the first receiving beam corresponds to a first TRP or a second TRP, and the second receiving beam corresponds to the second TRP.

The transceiver 900 is configured to receive and send data under the control of the processor 910.

In FIG. 8, the bus architecture may include any number of interconnected buses and bridges. In detail, various circuits of one or more processors represented by the processor 910 and memories represented by the memory 920 are linked together. The bus architecture may also link together various other circuits such as peripheral devices, voltage regulators, and power management circuits, which are well known in the art and will not be further described herein. The bus interface provides an interface. The transceiver 900 may be a plurality of elements, including a transmitter and a receiver, providing units for communicating with various other devices on transmission media. The transmission media include a wireless channel, a wired channel, a fiber optic cable, etc. The processor 910 is responsible for managing the bus architecture and usual processing, and the memory 920 can store the data used by the processor 910 in performing operations.

The processor 910 can be a CPU, an ASIC, a FPGA, or a CPLD, and the processor 910 can adopt a multi-core architecture.

As a possible implementation, the first receiving beam corresponds to the first TRP, and the second receiving beam corresponds to an initial beam of the second TRP.

As a possible implementation, the first indication information is a first MAC CE; in which the first MAC CE is configured to indicate an ID of a first CORESET associated with the second TRP and a TCI state index corresponding to the initial beam of the second TRP, and the initial beam of the second TRP corresponds to the first CORESET.

As a possible implementation, the first indication information is a second MAC CE and first DCI; in which the second MAC CE is configured to indicate a plurality of activated TCI state indexes; and the first DCI is configured to indicate a TCI state index corresponding to the initial beam of the second TRP, and the TCI state index is one TCI state index of the plurality of activated TCI state indexes included in the second MAC CE.

As a possible implementation, the first receiving beam corresponds to the first TRP, and the second receiving beam corresponds to an update beam of the second TRP; or the first receiving beam corresponds to the second TRP, and the second receiving beam corresponds to an update beam of the second TRP.

As a possible implementation, the first indication information is a third MAC CE;
in which, the third MAC CE is configured to indicate an ID of a second CORESET associated with the second TRP and a TCI state index corresponding to the update beam of the second TRP, and the update beam of the second TRP corresponds to the second CORESET.

As a possible implementation, the first indication information is a fourth MAC CE and second DCI;
in which, the fourth MAC CE is configured to indicate a plurality of activated TCI state indexes; and
the second DCI is configured to indicate a TCI state index corresponding to the update beam of the second TRP, and the TCI state index is one TCI state index of the plurality of activated TCI state indexes included in the fourth MAC CE.

As a possible implementation, the plurality of TCI state indexes carried in the fourth MAC CE include a TCI state index corresponding to an initial beam of the second TRP.

As a possible implementation, the first DCI and the second DCI include a target indication field, and the target indication field is configured to indicate a TRP ID and/or a CORESET pool index corresponding to the TCI state index.

As a possible implementation, in the first DCI and the second DCI, each TCI state index corresponds to a preset TRP ID and/or a CORESET pool index.

As a possible implementation, a TRP ID and/or a CORESET pool index corresponding to the TCI state index in either the first DCI or the second DCI is a TRP ID and/or a CORESET pool index indicated by the MAC CE that activates the TCI state index.

As a possible implementation, the first receiving beam is an initial receiving beam corresponding to a CORESET CORESET#0 associated with the first TRP.

As a possible implementation, the network device further includes:
sending second indication information to the terminal device using a sending beam corresponding to a known receiving beam of the terminal device;
in which, the second indication information is configured to indicate the first receiving beam of the terminal device, and the known receiving beam corresponds to the first TRP.

As a possible implementation, the known receiving beam corresponds to a CORESET CORESET#0 associated with the first TRP; or the known receiving beam corresponds to a third CORESET associated with the first TRP, and is indicated by third indication information sent through the CORESET CORESET#0 associated with the first TRP.

As a possible implementation, at least one MAC CE of the first MAC CE, the second MAC CE, the third MAC CE and the fourth MAC CE includes:
one or more TCI state indexes corresponding to a TRP ID; or
one or more TCI state indexes corresponding to a CORESET pool index.

As a possible implementation, at least one MAC CE of the first MAC CE, the second MAC CE, the third MAC CE and the fourth MAC CE includes:
a plurality of TCI state indexes corresponding to a plurality of TRP IDs, in which each TCI state index corresponds to a TRP ID; or
a plurality of TCI state indexes corresponding to a plurality of CORESET pool indexes, in which each TCI state index corresponds to a CORESET pool index.

As a possible implementation, at least one MAC CE of the first MAC CE, the second MAC CE, the third MAC CE and the fourth MAC CE includes:
an indication field corresponding to at least one TCI state index, in which the indication field is configured to indicate whether the at least one TCI state index exists in the at least one MAC CE.

It should be noted here that the above network device provided by the embodiment of the disclosure is able to achieve all the method steps implemented in the method embodiments of FIGS. 3 to 4 above, and is able to achieve the same technical effect, and the same parts and beneficial effects as those in the method embodiments are not repeated here.

In order to achieve the above embodiments, the disclosure also provides a communication system.

The embodiment of the disclosure provides a communication system, including a terminal device and a network device. The terminal device is capable of implementing the beam indication method described in any one of FIGS. 1 to 2, and the network device is capable of implementing the beam indication method described in any one of FIGS. 3 to 4.

In order to achieve the above embodiments, the disclosure also provides a computer storage medium.

The embodiment of the disclosure provides a computer storage medium having executable programs stored thereon. When the executable programs are executed by a processor, the above-mentioned method, for example, at least the method of any one of FIGS. 1 to 4 is implemented.

In order to achieve the above embodiments, the disclosure also provides a computer program product.

The embodiment of the disclosure provides a computer program product. When the executable programs are executed by a processor, the above-mentioned method, for example, at least the method of any one of FIGS. 1 to 4 is implemented.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples be considered as exemplary only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A beam indication method, applicable to a terminal device, comprising:
receiving, using a first receiving beam, first indication information sent by a network device, wherein the first indication information is configured to indicate a second receiving beam;
wherein, the first receiving beam corresponds to a first Transmission and Reception Point (TRP) or a second TRP, and the second receiving beam corresponds to the second TRP.

2. The method of claim 1, wherein the first receiving beam corresponds to the first TRP, and the second receiving beam corresponds to an initial beam of the second TRP.

3. The method of claim 2, wherein the first indication information is a first Medium Access Control Control Element (MAC CE);
wherein, the first MAC CE is configured to indicate an identification (ID) of a first Control Resource Set (CORESET) associated with the second TRP and a Transmission Configuration Indicator (TCI) state index corresponding to the initial beam of the second TRP, wherein the initial beam of the second TRP corresponds to the first CORESET.

4. The method of claim 2, wherein the first indication information is a second MAC CE and first Downlink Control Information (DCI);
wherein, the second MAC CE is configured to indicate a plurality of activated TCI state indexes; and
the first DCI is configured to indicate a TCI state index corresponding to the initial beam of the second TRP, and the TCI state index is one TCI state index of the plurality of activated TCI state indexes comprised in the second MAC CE.

5. The method of claim 1, wherein the first receiving beam corresponds to the first TRP, and the second receiving beam corresponds to an update beam of the second TRP; or
the first receiving beam corresponds to the second TRP, and the second receiving beam corresponds to an update beam of the second TRP.

6. The method of claim 5, wherein the first indication information is a third MAC CE;
wherein, the third MAC CE is configured to indicate an ID of a second CORESET associated with the second TRP and a TCI state index corresponding to the update beam of the second TRP, wherein the update beam of the second TRP corresponds to the second CORESET.

7. The method of claim 5, wherein the first indication information is a fourth MAC CE and a second DCI;
wherein, the fourth MAC CE is configured to indicate a plurality of activated TCI state indexes; and
the second DCI is configured to indicate a TCI state index corresponding to the update beam of the second TRP, and the TCI state index is one TCI state index of the plurality of activated TCI state indexes comprised in the fourth MAC CE.

8. The method of claim 7, wherein the plurality of activated TCI state indexes carried in the fourth MAC CE comprise a TCI state index corresponding to an initial beam of the second TRP.

9. The method of any one of claims 4, 7 and 8, wherein the first DCI and the second DCI comprise a target indication field, and the target indication field is configured to indicate a TRP ID and/or a CORESET pool index corresponding to the TCI state index.

10. The method of any one of claims 4, 7 and 8, wherein in the first DCI and the second DCI, each TCI state index corresponds to a preset TRP ID and/or a CORESET pool index.

11. The method of any one of claims 4, 7 and 8, wherein a TRP ID and/or a CORESET pool index corresponding to the TCI state index in either the first DCI or the second DCI is a TRP ID and/or a CORESET pool index indicated by the MAC CE that activates the TCI state index.

12. The method of claim 1, further comprising:
determining the first receiving beam;
wherein, the first receiving beam is an initial receiving beam of a CORESET CORESET#0 associated with the first TRP.

13. The method of claim 1, further comprising:
receiving second indication information using a known receiving beam corresponding to the first TRP, wherein the second indication information is configured to determine the first receiving beam.

14. The method of claim 13, wherein the known receiving beam corresponds to a CORESET CORESET#0 associated with the first TRP; or
the known receiving beam corresponds to a third CORESET associated with the first TRP, and is indicated by third indication information sent using the CORESET CORESET#0 associated with the first TRP.

15. The method of any one of claims 3, 4, 6 and 7, wherein at least one MAC CE of the first MAC CE, the second MAC CE, the third MAC CE and the fourth MAC CE comprises:
one or more TCI state indexes corresponding to a TRP ID; or
one or more TCI state indexes corresponding to a CORESET pool index.

16. The method of any one of claims 3, 4, 6 and 7, wherein at least one MAC CE of the first MAC CE, the second MAC CE, the third MAC CE and the fourth MAC CE comprises:
a plurality of TCI state indexes corresponding to a plurality of TRP IDs, wherein each TCI state index corresponds to a TRP ID; or
a plurality of TCI state indexes corresponding to a plurality of CORESET pool indexes, wherein each TCI state index corresponds to a CORESET pool index.

17. The method of any one of claims 3, 4, 6 and 7, wherein at least one MAC CE of the first MAC CE, the second MAC CE, the third MAC CE and the fourth MAC CE comprises:
an indication field corresponding to at least one TCI state index, wherein the indication field is configured to indicate whether the at least one TCI state index exists in the at least one MAC CE.

18. A beam indication method, applicable to a network device, comprising:
sending first indication information to a terminal device using a first sending beam;
wherein, the first indication information is configured to indicate a second receiving beam of the terminal device, and the first sending beam corresponds to a first receiving beam of the terminal device; and
the first receiving beam corresponds to a first Transmission and Reception Point (TRP) or a second TRP, and the second receiving beam corresponds to the second TRP.

19. The method of claim 18, wherein the first receiving beam corresponds to the first TRP, and the second receiving beam corresponds to an initial beam of the second TRP.

20. The method of claim 19, wherein the first indication information is a first Medium Access Control Control Element (MAC CE),
wherein, the first MAC CE is configured to indicate an identification (ID) of a first Control Resource Set (CORESET) associated with the second TRP and a Transmission Configuration Indicator (TCI) state index corresponding to the initial beam of the second TRP, wherein the initial beam of the second TRP corresponds to the first CORESET.

21. The method of claim 19, wherein the first indication information is a second MAC CE and first Downlink Control Information (DCI);
wherein, the second MAC CE is configured to indicate a plurality of activated TCI state indexes; and
the first DCI is configured to indicate a TCI state index corresponding to the initial beam of the second TRP, and the TCI state index is one TCI state index of the plurality of activated TCI state indexes comprised in the second MAC CE.

22. The method of claim 18, wherein the first receiving beam corresponds to the first TRP, and the second receiving beam corresponds to an update beam of the second TRP; or
the first receiving beam corresponds to the second TRP, and the second receiving beam corresponds to an update beam of the second TRP.

23. The method of claim 22, wherein the first indication information is a third MAC CE; wherein, the third MAC CE is configured to indicate an ID of a second CORESET associated with the second TRP and a TCI state index corresponding to the update beam of the second TRP, wherein the update beam of the second TRP corresponds to the second CORESET.

24. The method of claim 22, wherein the first indication information is a fourth MAC CE and a second DCI;
wherein, the fourth MAC CE is configured to indicate a plurality of activated TCI state indexes; and
the second DCI is configured to indicate a TCI state index corresponding to the update beam of the second TRP, and the TCI state index is one TCI state index of the plurality of activated TCI state indexes comprised in the fourth MAC CE.

25. The method of claim 24, wherein the plurality of TCI state indexes carried in the fourth MAC CE comprise a TCI state index corresponding to an initial beam of the second TRP.

26. The method of any one of claims 21, 24 and 25, wherein the first DCI and the second DCI comprise a target indication field, and the target indication field is configured to indicate a TRP ID and/or a CORESET pool index corresponding to the TCI state index.

27. The method of any one of claims 21, 24 and 25, wherein in the first DCI and the second DCI, each TCI state index corresponds to a preset TRP ID and/or a CORESET pool index.

28. The method of any one of claims 21, 24 and 25, wherein a TRP ID and/or a CORESET pool index corresponding to the TCI state index in either the first DCI or the second DCI is a TRP ID and/or a CORESET pool index indicated by the MAC CE that activates the TCI state index.

29. The method of claim 18, wherein the first receiving beam is an initial receiving beam corresponding to a CORESET CORESET#0 associated with the first TRP.

30. The method of claim 18, further comprising:
sending second indication information to the terminal device using a sending beam corresponding to a known receiving beam of the terminal device;
wherein, the second indication information is configured to indicate the first receiving beam of the terminal device, and the known receiving beam corresponds to the first TRP.

31. The method of claim 30, wherein the known receiving beam corresponds to a CORESET CORESET#0 associated with the first TRP; or
the known receiving beam corresponds to a third CORESET associated with the first TRP, and is indicated by third indication information sent through the CORESET CORESET#0 associated with the first TRP.

32. The method of any one of claims 20, 21, 23 and 24, wherein at least one MAC CE of the first MAC CE, the second MAC CE, the third MAC CE and the fourth MAC CE comprises:
one or more TCI state indexes corresponding to a TRP ID; or
one or more TCI state indexes corresponding to a CORESET pool index.

33. The method of any one of claims 20, 21, 23 and 24, wherein at least one MAC CE of the first MAC CE, the second MAC CE, the third MAC CE and the fourth MAC CE comprises:
a plurality of TCI state indexes corresponding to a plurality of TRP IDs, wherein each TCI state index corresponds to a TRP ID; or
a plurality of TCI state indexes corresponding to a plurality of CORESET pool indexes, wherein each TCI state index corresponds to a CORESET pool index.

34. The method of any one of claims 20, 21, 23 and 24, wherein at least one MAC CE of the first MAC CE, the second MAC CE, the third MAC CE and the fourth MAC CE comprises:
an indication field corresponding to at least one TCI state index, wherein the indication field is configured to indicate whether the at least one TCI state index exists in the at least one MAC CE.

35. A beam indication apparatus, applicable to a terminal device, comprising:
a receiving module, configured to receive first indication information sent by a network device using a first receiving beam, wherein the first indication information is configured to indicate a second receiving beam;
wherein, the first receiving beam corresponds to a first Transmission and Reception Point (TRP) or a second TRP, and the second receiving beam corresponds to the second TRP.

36. A beam indication apparatus, applicable to a network device, comprising:
a sending module, configured to send first indication information to a terminal device using a first sending beam;
wherein, the first indication information is configured to indicate a second receiving beam of the terminal device, and the first sending beam corresponds to a first receiving beam of the terminal device; and
the first receiving beam corresponds to a first Transmission and Reception Point (TRP) or a second TRP, and the second receiving beam corresponds to the second TRP.

37. A terminal device, comprising: a transceiver, a memory and a processor;
wherein, the memory is configured to store computer programs, the transceiver is configured to send and receive data under control of the processor, and the processor is configured to read the computer programs in the memory to perform the following operations:
receiving, using a first receiving beam, first indication information sent by a network device, wherein the first indication information is configured to indicate a second receiving beam;
wherein, the first receiving beam corresponds to a first Transmission and Reception Point (TRP) or a second TRP, and the second receiving beam corresponds to the second TRP.

38. The terminal device of claim 37, wherein the first receiving beam corresponds to the first TRP, and the second receiving beam corresponds to an initial beam of the second TRP.

39. The terminal device of claim 38, wherein the first indication information is a first Medium Access Control Control Element (MAC CE);
wherein, the first MAC CE is configured to indicate an identification (ID) of a first Control Resource Set (CORESET) associated with the second TRP and a Transmission Configuration Indicator (TCI) state index corresponding to the initial beam of the second TRP, wherein the initial beam of the second TRP corresponds to the first CORESET.

40. The terminal device of claim 38, wherein the first indication information is a second MAC CE and first Downlink Control Information (DCI);
wherein, the second MAC CE is configured to indicate a plurality of activated TCI state indexes; and
the first DCI is configured to indicate a TCI state index corresponding to the initial beam of the second TRP, and the TCI state index is one TCI state index of the plurality of activated TCI state indexes comprised in the second MAC CE.

41. The terminal device of claim 37, wherein the first receiving beam corresponds to the first TRP, and the second receiving beam corresponds to an update beam of the second TRP; or
the first receiving beam corresponds to the second TRP, and the second receiving beam corresponds to an update beam of the second TRP.

42. The terminal device of claim 41, wherein the first indication information is a third MAC CE;
wherein, the third MAC CE is configured to indicate an ID of a second CORESET associated with the second TRP and a TCI state index corresponding to the update beam of the second TRP, wherein the update beam of the second TRP corresponds to the second CORESET.

43. The terminal device of claim 41, wherein the first indication information is a fourth MAC CE and second DCI;
wherein, the fourth MAC CE is configured to indicate a plurality of activated TCI state indexes; and
the second DCI is configured to indicate a TCI state index corresponding to the update beam of the second TRP, and the TCI state index is one TCI state index of the plurality of activated TCI state indexes comprised in the fourth MAC CE.

44. The terminal device of claim 43, wherein the plurality of activated TCI state indexes carried in the fourth MAC CE comprise a TCI state index corresponding to an initial beam of the second TRP.

45. The terminal device of any one of claims 404, 43 and 44, wherein the first DCI and the second DCI comprise a target indication field, and the target indication field is configured to indicate a TRP ID and/or a CORESET pool index corresponding to the TCI state index.

46. The terminal device of any one of claims 40, 43 and 44, wherein in the first DCI and the second DCI, each TCI state index corresponds to a preset TRP ID and/or a CORESET pool index.

47. The terminal device of any one of claims 40, 43 and 44, wherein a TRP ID and/or a CORESET pool index corresponding to the TCI state index in either the first DCI or the second DCI is a TRP ID and/or a CORESET pool index indicated by the MAC CE that activates the TCI state index.

48. The terminal device of claim 37, further comprising:
determining the first receiving beam;
wherein, the first receiving beam is an initial receiving beam of a CORESET CORESET#0 associated with the first TRP.

49. The terminal device of claim 37, further comprising:
receiving second indication information using a known receiving beam corresponding to the first TRP, wherein the second indication information is configured to determine the first receiving beam.

50. The terminal device of claim 49, wherein the known receiving beam corresponds to a CORESET CORESET#0 associated with the first TRP; or
the known receiving beam corresponds to a third CORESET associated with the first TRP, and is indicated by third indication information sent using the CORESET CORESET#0 associated with the first TRP.

51. The terminal device of any one of claims 39, 40, 42 and 43, wherein at least one MAC CE of the first MAC CE, the second MAC CE, the third MAC CE and the fourth MAC CE comprises:
one or more TCI state indexes corresponding to a TRP ID; or
one or more TCI state indexes corresponding to a CORESET pool index.

52. The terminal device of any one of claims 39, 40, 42 and 43, wherein at least one MAC CE of the first MAC CE, the second MAC CE, the third MAC CE and the fourth MAC CE comprises:
a plurality of TCI state indexes corresponding to a plurality of TRP IDs, wherein each TCI state index corresponds to a TRP ID; or
a plurality of TCI state indexes corresponding to a plurality of CORESET pool indexes, wherein each TCI state index corresponds to a CORESET pool index.

53. The terminal device of any one of claims 39, 40, 42 and 43, wherein at least one MAC CE of the first MAC CE, the second MAC CE, the third MAC CE and the fourth MAC CE comprises:
an indication field corresponding to at least one TCI state index, wherein the indication field is configured to indicate whether the at least one TCI state index exists in the at least one MAC CE.

54. A network device, comprising: a transceiver, a memory and a processor;
wherein, the memory is configured to store computer programs, the transceiver is configured to send and receive data under control of the processor, and the processor is configured to read the computer programs in the memory to perform the following operations:
sending first indication information to a terminal device using a first sending beam;
wherein, the first indication information is configured to indicate a second receiving beam of the terminal device, and the first sending beam corresponds to a first receiving beam of the terminal device; and
the first receiving beam corresponds to a first Transmission and Reception Point (TRP) or a second TRP, and the second receiving beam corresponds to the second TRP.

55. The network device of claim 54, wherein the first receiving beam corresponds to the first TRP, and the second receiving beam corresponds to an initial beam of the second TRP.

56. The network device of claim 55, wherein the first indication information is a first Medium Access Control Control Element (MAC CE);
wherein, the first MAC CE is configured to indicate an identification (ID) of a first Control Resource Set (CORESET) associated with the second TRP and a Transmission Configuration Indicator (TCI) state index corresponding to the initial beam of the second TRP, wherein the initial beam of the second TRP corresponds to the first CORESET.

57. The network device of claim 55, wherein the first indication information is a second MAC CE and first Downlink Control Information (DCI);
wherein, the second MAC CE is configured to indicate a plurality of activated TCI state indexes; and
the first DCI is configured to indicate a TCI state index corresponding to the initial beam of the second TRP, and the TCI state index is one TCI state index of the plurality of activated TCI state indexes comprised in the second MAC CE.

58. The network device of claim 54, wherein the first receiving beam corresponds to the first TRP, and the second receiving beam corresponds to an update beam of the second TRP; or
the first receiving beam corresponds to the second TRP, and the second receiving beam corresponds to an update beam of the second TRP.

59. The network device of claim 58, wherein the first indication information is a third MAC CE;
wherein, the third MAC CE is configured to indicate an ID of a second CORESET associated with the second TRP and a TCI state index corresponding to the update beam of the second TRP, wherein the update beam of the second TRP corresponds to the second CORESET.

60. The network device of claim 58, wherein the first indication information is a fourth MAC CE and second DCI; wherein
wherein, the fourth MAC CE is configured to indicate a plurality of activated TCI state indexes; and
the second DCI is configured to indicate a TCI state index corresponding to the update beam of the second TRP, and the TCI state index is one TCI state index of the plurality of activated TCI state indexes comprised in the fourth MAC CE.

61. The network device of claim 60, wherein the plurality of TCI state indexes carried in the fourth MAC CE comprise a TCI state index corresponding to an initial beam of the second TRP.

62. The network device of any one of claims 57, 60 and 61, wherein the first DCI and the second DCI comprise a target indication field, and the target indication field is configured to indicate a TRP ID and/or a CORESET pool index corresponding to the TCI state index.

63. The network device of any one of claims 57, 60 and 61, wherein in the first DCI and the second DCI, each TCI state index corresponds to a preset TRP ID and/or a CORESET pool index.

64. The network device of any one of claims 57, 60 and 61, wherein a TRP ID and/or a CORESET pool index corresponding to the TCI state index in either the first DCI or the second DCI is a TRP ID and/or a CORESET pool index indicated by the MAC CE that activates the TCI state index.

65. The network device of claim 54, wherein the first receiving beam is an initial receiving beam corresponding to a CORESET CORESET#0 associated with the first TRP.

66. The network device of claim 54, further comprising:
sending second indication information to the terminal device using a sending beam corresponding to a known receiving beam of the terminal device;
wherein, the second indication information is configured to indicate the first receiving beam of the terminal device, and the known receiving beam corresponds to the first TRP.

67. The network device of claim 66, wherein the known receiving beam corresponds to a CORESET CORESET#0 associated with the first TRP; or
the known receiving beam corresponds to a third CORESET associated with the first TRP, and is indicated by third indication information sent through the CORESET CORESET#0 associated with the first TRP.

68. The network device of any one of claims 56, 57, 59 and 60, wherein at least one MAC CE of the first MAC CE, the second MAC CE, the third MAC CE and the fourth MAC CE comprises:
one or more TCI state indexes corresponding to a TRP ID; or
one or more TCI state indexes corresponding to a CORESET pool index.

69. The network device of any one of claims 56, 57, 59 and 60, wherein at least one MAC CE of the first MAC CE, the second MAC CE, the third MAC CE and the fourth MAC CE comprises:
a plurality of TCI state indexes corresponding to a plurality of TRP IDs, wherein each TCI state index corresponds to a TRP ID; or
a plurality of TCI state indexes corresponding to a plurality of CORESET pool indexes, wherein each TCI state index corresponds to a CORESET pool index.

70. The network device of any one of claims 56, 57, 59 and 60, wherein at least one MAC CE of the first MAC CE, the second MAC CE, the third MAC CE and the fourth MAC CE comprises:
an indication field corresponding to at least one TCI state index, wherein the indication field is configured to indicate whether the at least one TCI state index exists in the at least one MAC CE.

71. A computer storage medium having computer-executable instructions stored thereon, wherein when the computer-executable instructions are executed by a processor, the method of any one of claims 1 to 17 is implemented.

72. A computer storage medium having computer-executable instructions stored thereon, wherein when the computer-executable instructions are executed by a processor, the method of any one of claims 18 to 34 is implemented.
